# EUROPEAN PATENT APPLICATION

(11) **EP 1 677 218 A2**
(43) Date of publication of application: **05.07.2006**
(21) Application number: 05292799.3
(22) Date of filing: 27.12.2005
(51) Int. Cl.: G06F 17/30

(54) **Method for interacting with automated information agents using conversational queries**

(30) Priority: 31.12.2004 US 26421
(71) Applicant: France Télécom, 75015 Paris (FR)
(72) Inventor: Chesnais, Pascal, Cambridge, MA 02142 (US); Pomeroy, Steve, Cambridge, MA 02142 (US); Wheeler, Sean, Cambridge, MA 02142 (US)
(74) Representative: Thach, Tum

(57) **Abstract**

In order to reduce or eliminate ergonomic inefficiencies arising when an automated information agent is accessed from a device having a streamlined graphical user interface, the present invention provides a mechanism for selecting and interacting with automated information agents over a text-based messaging network by means of a conversational interface that can respond to queries in accordance with the location of the device. A server sends an electronic message identifying each of a plurality of agents to the device. The streamlined graphical user interface displays an agent selection screen showing identity information for each of the plurality of agents identified in the electronic message. The device includes an input mechanism capable of accepting a user's selection of an agent. Upon receiving a first input specifying a first selected agent, the device displays an agent interaction screen for the first selected agent. At least a portion of the agent interaction screen is capable of displaying a query entered into the input mechanism. Optionally, enabling mechanisms are provided on the server to allow human intervention in response to a query.

## Description

### FIELD OF THE INVENTION

The invention relates generally to communication networks and, more specifically, to mechanisms for selecting and interacting with automated information agents over a text-based messaging network by means of a conversational interface that responds to queries in accordance with the location of the device.

### BACKGROUND OF THE INVENTION

On the Internet, an automated information agent ("agent" hereinafter) is a program that gathers information or performs a service without user intervention. Agents are equipped to receive a query from a user, extract one or more search parameters from the query, perform a search throughout all or selected portions of the Internet, gather information related to the search parameters from one or more databases, and present the gathered information to the user on a daily, periodic, repeated, or one-time basis. Agents are sometimes called "bots", derived from the word "robot", reflecting the autonomous aspect of the agent.

Agents are frequently employed to gather user-specific information from an individual accessing an Internet web site, and to utilize this information to deliver a personalized presentation of information on the web site. User-specific information is gathered in response to an individual filling out an online registration form accessible from the web site, and also from web site usage history records. In addition, agents are used to handle tasks such as reporting the weather, providing postal zip code information, providing sports scores, and converting currency from one unit to another.

Agents are also commonly utilized in conjunction with multi-user Internet chat rooms and Instant Messaging (IM) software. In these environments, agents can respond to a user's log-in status. From a first Internet-enabled device (e.g., a personal computer, laptop computer or mobile device), IM software is equipped to determine whether a specified Internet account assigned to a remotely-situated individual, such as a friend, coworker, or business contact, is currently logged onto the Internet. The specified Internet account is identified by: (a) a user name, (b) an email address, or (c) a user name combined with a domain name, any of which are referred to herein using the term "messaging address". IM software at the first Internet-enabled device is equipped to determine whether or not the specified Internet account is logged onto the Internet using a second Internet-enabled device. This IM software is also equipped to process incoming electronic text messages (such as Instant Messages) received from the second Internet-enabled device, and to process outgoing electronic text messages (such as Instant Messages) directed from the first Internet-enabled device to the second Internet-enabled device. IM software at the second Internet-enabled device is similarly equipped to process electronic text messages to and from the first Internet-enabled device. Some IM software, such as AOL Instant Messaging (AIM), provides for the reception and transmission of electronic text messages, voice messages and electronic files.

IM differs from ordinary e-mail in that IM provides a more immediate form of message exchange, as well as a degree of simplification in situations where an ongoing exchange would otherwise require a long chain of e-mail messages going back and forth. IM is often used to implement real-time online conversations between friends, family, and business colleagues.

Although agents are capable of delivering commercial messages to users in an IM system, this capability has not been widely exploited. One relevant concern among potential advertisers is that an important user-to-user communication could be interrupted by a commercial message, thereby annoying or frustrating some users. But, even though some commercial agent applications would be unacceptably intrusive to users, agents have been advantageously exploited in appropriate commercial settings to provide users with useful and relevant information. At least two presently-existing applications use agents to provide commercially-sponsored interactive information that is accessible over an IM interface. These applications include AOL's deployment of Yellow Page information through AOL's IM network (hereinafter referred to as AOL Yellow Pages), and Comcast's use of technology from Conversagent to provide customer service information to its customers.

Access to agents over instant messaging networks is hampered by user interface limitations on mobile devices. These limitations may be illustrated in the context of AOL Yellow Pages, which is an agent that provides information about services or businesses within a specified category, such as restaurants. The agent is accessible from virtually any Internet-enabled desktop or laptop computer equipped with IM software. Most existing Internet service provider (ISP) software packages contain integrated IM software, including AOL Versions 7.0- 9.0. Although AOL Yellow Pages was not specifically intended for use with mobile devices, this service is nonetheless accessible through any of a wide variety of cellular telephones that are capable of downloading and executing AOL IM software. Accordingly, AOL Yellow Pages is an exemplary prior art system that serves to illustrate the shortcomings and limitations of interacting with an IM agent while using a mobile device.

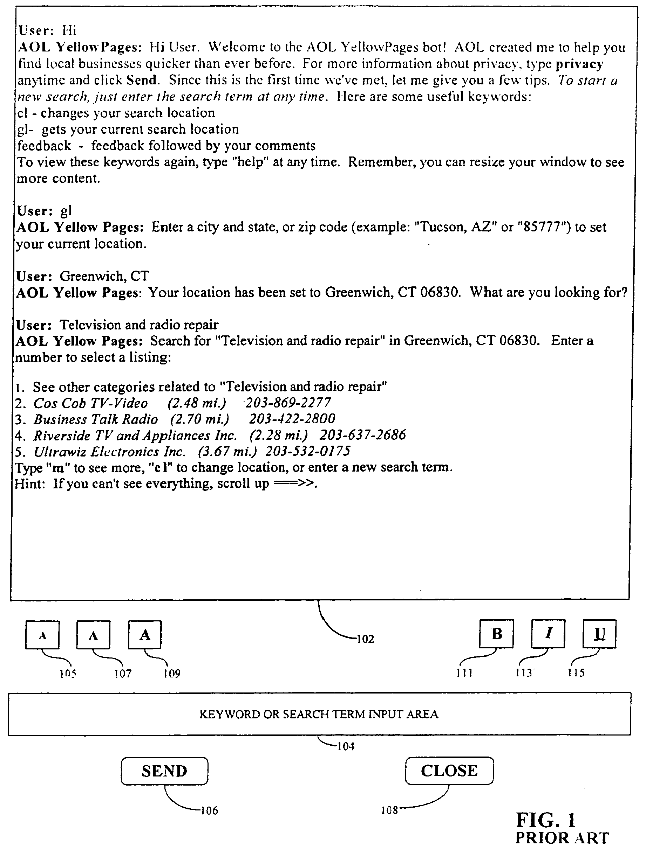

FIG. 1 is a screen capture showing user interaction with a prior art automated information agent referred to as "AOL Yellow Pages". In this example, the user interacts with AOL Yellow Pages from a desktop computer. The interaction includes a step-by-step dialogue, led by the AOL Yellow Pages agent, that guides the user in responding to various queries. The dialogue is displayed on a display window 102 of an electronic display screen. Users initiate access to the AOL Yellow Pages agent via the AOL Instant Messaging system by sending a message to a specified screen name, "AOL Yellow Pages", designated for use by the agent. One benefit of this access method is that the user does not have to learn a specialized command sequence. Rather, users need only send an instant message to the agent, following the same sequence of steps that would be required when initiating IM communication with a personal or business contact. Users may place frequently-used IM screen names, including "AOL Yellow Pages", into a "buddy list" that is accessible from AOL's main screen via a single click of the mouse.

After a user accesses the AOL Yellow Pages agent by sending an instant message to the AOL Yellow Pages screen name, the user may enter one or more search queries using names of geographic locations and specified keyword commands. When commands, location names, and other characters are entered by the user, they appear in a keyword or search term input area 104 of the electronic display screen. However, the agent is not equipped to process commands that use English words, such as "change location", "show more listings", or "search for repair shops". Geographic locations (i.e., Greenwich, CT) must be spelled out.

Once the user's entered command or character sequence appears in keyword or search term area 104, the user enters a mouse click over a send button 106, thereby initiating transmission of an instant message to the agent that includes the command or character sequence shown in keyword or search term input area 104. The entered command or character sequence then appears in display window 102, immediately following the user's assigned AOL screen name. Once the agent responds to the user's entered command or character sequence, the agent response appears below the user's entered command or character sequence after the heading "AOL Yellow Pages". If the user desires to change the font size of entered commands or character sequences, the user enters a mouse click over font size buttons 105, 107, 109. If the user desires to enter commands or character sequences that include bold characters, italicized characters, or underlined characters, the user enters a mouse click over, respectively, bold button 111, italics button 113, or underline button 115. If the user desires to terminate the application, the user enters a mouse click over a close button 108.

AOL Yellow pages provides an inflexible and specialized command interface. As shown in FIG. 1, users interact with the agent using short, cryptic keyword commands, such as "gl" (get location), "cl" (change location), and "m" (more). AOL's short keyword commands are idiosyncratic to the AOL Yellow Pages application and must be learned by the user. Other software programs may use the short keyword commands to implement a totally different set of functionalities, thereby confusing the user. What is needed is an improved technique for interacting with agents over a mobile device.

Conventional IM software is problematic when it is utilized to provide an interface between a mobile device user and an agent. Graphical user interfaces (GUIs) employed by IM software (including AOL's IM software) were developed for desktop and laptop computers, and are not always appropriate or desirable for use in mobile applications. IM GUIs provide the complete dialogue history of an agent interaction on a scrollable screen display, but this feature is unnecessary and confusing in a mobile environment. Long conversations are displayed as a multiplicity of lines filling the screen, with the effect that it becomes difficult for users to manipulate the small controls on a mobile device to browse through these conversations. What is needed is an improved technique for displaying agent interaction dialogues on the display screen of a mobile device.

Users may access other intelligent agents in addition to the AOL Yellow Pages agent, but these agents must be addressed in a separate chat window. Accordingly, if a user accesses a plurality of agents from a desktop environment, a corresponding plurality of windows will be opened. In a mobile environment, such windows cannot be adequately displayed on the relatively small screen of a handheld mobile device, nor may the GUI of the mobile device be equipped to display multiple windows. What is needed is an improved technique for accessing multiple agents from a mobile device.

Mobile devices are capable of automatically determining a user's geographic area of interest. For example, a user's location may be captured from an on-board GPS receiver, or from the identity of a cell (Cell-ID) that is currently engaged in communication with the mobile device. This geographic area of interest can the be used to automatically refine the scope of a user query. Yet, the AOL Yellow Pages agent requires the user to enter a specific geographic location, which is an unnecessary step in a mobile environment. Once the agent determines the response to a user query, the agent provides query results in the form of hyperlinks displayed as an overlay against a map. By automatically acquiring the user's geographic area of interest, the agent could automatically streamline and tailor dialogue interaction, so as to provide query results more closely tailored to the user's geographic area of interest. Accordingly, what is needed is an improved technique for automatically communicating the location of a mobile device user to an agent.

In terms of information architecture, IM software presents additional drawbacks. There is no mechanism by which users can search to locate other AOL agents that may be accessed by means of an AOL Instant Message. As additional commercial automated agents are developed by third parties, finding and accessing appropriate bots becomes more complicated. Likewise, the capabilities of bots are undergoing substantial expansion and development, with the result that a single content provider could be used to deliver yellow page information, as well as weather information, from an agent accessible from a single AOL screen name.

What is needed is a mechanism by which users are able to search for publicly accessible agents that are potentially useful in responding to a predefined query. Such a mechanism should be capable of organizing and selecting agents, browsing one or more functionalities provided by the agent, supporting substantially simultaneous interaction with a plurality of agents in a unified graphical user interface, and providing a framework for flexible and unified command interaction with shared dialog files.

### SUMMARY OF THE INVENTION

One aspect of the invention is directed to a system for reducing or eliminating ergonomic inefficiencies arising when an automated information agent is accessed from a device having a text-based graphical user interface and an input mechanism, wherein the graphical user interface is capable of displaying at least textual information and the input mechanism is capable of accepting a user's selection of a specified agent from a menu of agents and a user-entered, text-based, plain language query. The system comprises a message server for receiving the plain language query from the device, and for routing the plain language query to the specified agent. A conversational interpretation mechanism, in communication with the specified agent, formulates an agent-readable query from the plain language query to which the specified agent is capable of responding.

Another aspect of the invention is directed to a device for accessing any one from among a plurality of automated information agents, the device being usable with a system comprising: (i) a message server for receiving a text-based, plain language query from the device, and for routing the plain language query to a user-selected agent from among the plurality of agents; and (ii) a conversational interpretation mechanism, in communication with the user-selected agent, for formulating an agent-readable query from the plain language query to which the specified agent is capable of responding. The device comprises a communication mechanism for transmitting at least one of a user's selection of an agent or a text-based, plain language query to the message server, a text-based graphical user interface capable of displaying textual information and a hierarchical menu of agents, and an input mechanism, capable of accepting a user's selection of a specified agent from the hierarchical menu of agents, and capable of accepting a text-based, plain language query.

Another aspect of the invention is directed to a method for reducing or eliminating ergonomic inefficiencies arising when an automated information agent is accessed from a device having a text-based graphical user interface. The method comprises the steps of generating a list of agents that are accessible to the device, transmitting the list of agents to the device, receiving from the device a user's selection of an agent included in the list of agents, receiving a plain language query from the device, routing the plain language query to the user-selected agent, the user-selected agent routing the plain language query to a conversational interpretation mechanism, the conversational interpretation mechanism transforming the plain language query into an agent-readable query to which the user-selected agent is capable of responding and then routing the agent-readable query to the user-selected agent, and the user-selected agent formulating a response to the agent-readable query.

Another aspect of the invention is directed a method for using a device to access any of a plurality of automated information agents. The method comprises the following steps performed by the device: receiving a list of agents that are accessible to the device, displaying the list of agents in the form of a hierarchical menu, accepting a user's selection of an agent from the hierarchical menu, accepting a plain language query entered by a user, transmitting the plain language query to the agent selected from the hierarchical menu, and receiving a response to the plain language query from the agent.

Another aspect of the invention is directed to a device for accessing any of a plurality of automated information agents, the device being usable with a system comprising a messaging transport mechanism for receiving a query from the device, and for routing the query to a user-selected agent from among the plurality of agents. The device comprises a communication mechanism for transmitting at least one of a user's selection of an agent or a query to the messaging transport mechanism, a text-based graphical user interface capable of displaying a hierarchical menu of agents and a template for a user to complete, an input mechanism, capable of accepting a user's selection of a specified agent from the hierarchical menu of agents, and capable of accepting user input for completing the template to thereby generate a user-completed template, and a processing mechanism capable of transforming the user-completed template into a query.

Another aspect of the invention is directed to a device for accessing a plurality of automated information agents, the device being usable with a system comprising a messaging transport mechanism for receiving a query from the device, and for routing the query to a user-selected agent from among the plurality of agents. The device comprises a communication mechanism for transmitting a user's selection of at least a first agent and a second agent to the messaging transport mechanism, a text-based graphical user interface capable of displaying a hierarchical menu of agents including at least the first agent and the second agent, an input mechanism, capable of accepting a user's selection of at least the first agent and the second agent from the hierarchical menu of agents, the text-based graphical user interface being capable of displaying a first icon corresponding to the first agent, and a second icon corresponding to the second agent, the input mechanism being responsive to a user clicking on the first icon to display a first agent interaction screen corresponding to the first agent, and being responsive to a user clicking on the second icon to display a second agent interaction screen corresponding to the second agent; wherein the first and second agent interaction screens are each capable of accepting a user-entered query from the input mechanism, thereby permitting substantially instantaneous access to each of a plurality of agents.

Another aspect of the invention is directed to a system for providing access to a specified agent selected from a plurality of automated information agents, the system being usable with a device having a streamlined graphical user interface and an input mechanism, wherein the streamlined graphical user interface is capable of displaying at least textual information and the input mechanism is capable of accepting a user's selection of a specified agent from a menu of agents and a user-entered, text-based, plain language query. The system comprises a messaging transport mechanism for receiving the plain language query from the device and for routing the plain language query to the specified agent, and a conversational interpretation mechanism, in communication with the specified agent, for formulating an agent-readable query to which the specified agent is capable of responding, and wherein the conversational interpretation mechanism comprises one or more dialog files for utilization by any of the plurality of agents.

Another aspect of the present invention is directed to a system for providing access to a specified automated information agent selected from a plurality of automated information agents, the system being usable with a device having a streamlined graphical user interface and an input mechanism, wherein the streamlined graphical user interface is capable of displaying at least textual information and the input mechanism is capable of accepting a user's selection of a specified agent from a menu of agents and a user-entered, text-based, plain language query. The system comprises a messaging transport mechanism for receiving the plain language query from the device, and for routing the plain language query to the specified agent, and a conversational interpretation mechanism, in communication with the specified agent, for formulating an agent-readable query to which the specified agent is capable of responding, and wherein the conversational interpretation mechanism comprises a shared conversational grammar database from which one or more textual terms associated with a previous plain language query received from the user are retrieved.

Another aspect of the invention is directed to a method for communicating with an automated information agent in the course of a group chat among a plurality of users over the Internet, wherein the agent is capable of responding to a query from any of the users to perform a search for information desired by the user. The method comprises joining a specified agent to the group chat in response to a message from any one of the users, monitoring subsequent messages from the users during the group chat for any message that includes an agent identifier and, if an agent identifier is detected which has been assigned to the specified agent, processing the message as a query to perform an information search responsive to said query.

Another aspect of the present invention is directed to a method for using an automated information agent to conduct a search over the Internet in response to a query from a user, comprising communicating a query from a user to an automated information agent, processing the query with the agent, determining whether (i) the user requested human intervention in connection with processing of said query, and/or (ii) a human intervention signal has been automatically generated responsive to processing of said query and, if so, communicating with a human operator to continue processing said query.

In order to reduce or eliminate ergonomic inefficiencies arising when an automated information agent is accessed from a device having a text-based graphical user interface, the present invention provides a mechanism for selecting and interacting with automated information agents over a text-based messaging network by means of a conversational interface that responds to queries in accordance with the location of the device. A message server sends an electronic message identifying each of a plurality of agents to the device. The graphical user interface displays an agent selection screen showing identity information for each of the plurality of agents identified in the electronic message. The device includes an input mechanism capable of accepting a user's selection of an agent. Upon receiving a first input specifying a first selected agent, the device displays an agent interaction screen for the first selected agent. At least a portion of the agent interaction screen is capable of displaying a query entered into the input mechanism.

Upon receipt of a query, the first selected agent automatically receives information about the location of the device from an external database and uses the received information to perform a location-based search in response to the query. The agent is capable of responding to queries formulated by completing an electronic template displayed in the agent interaction screen, queries formulated using one or more plain language words or phrases, and text-based queries comprising one or more keyword commands. Optionally, the agent is capable of responding to text-based queries formulated using any of a variety of communication protocols, such as Instant Messaging (IM), short messaging service (SMS), text messaging, and others.

The input mechanism is capable of accepting a second input for replacing any displayed agent interaction screen, such as the agent interaction screen for the first selected agent, with the agent selection screen. Upon display of the agent selection screen, the input mechanism is capable of receiving a third input specifying a second selected agent, whereupon the device displays an agent interaction screen for the second selected agent. The agent interaction screens for the first and second selected agents show the most recent query entered into the device, but do not include queries entered prior to the most recently entered query.

The input mechanism is capable of accepting a fourth input for replacing any displayed agent interaction screen, such as the agent interaction screen for the first selected agent, with another agent interaction screen, such as the agent interaction screen for the second selected agent. In this manner, the device is capable of sequentially cycling through a plurality of agent interaction screens displayed on the graphical user interface.

Pursuant to a further embodiment of the invention, the agent is capable of escalating a query to a human for personalized assistance. More specifically, the server stores a dialogue between a user and an agent by storing at least one query received from a device, at least one response to the query received from an agent, and the location of the device at the time that the query was received. The stored dialogue is accessible by a human assistant who may issue a response to the at least one query.

Pursuant to a further embodiment of the invention, the device is capable of substantially simultaneous interaction with the plurality of agents on a display mechanism comprising a single user interface device. Optionally, the plurality of agents utilize one or more shared dialog files for communicating with the device.

Pursuant to another further embodiment of the invention, the agent formulates a response to a user query using a shared conversational grammar that reuses one or more textual terms associated with a previous query received from the user.

Pursuant to another further embodiment of the invention, the agent provides a user help menu to the device wherein the menu is determined, at least in part, by the location of the device.

The various features of novelty which characterize the invention are pointed out with particularity in the claims annexed to and forming a part of the disclosure. For a better understanding of the invention, its operating advantages, and specific objects attained by its use, reference should be had to the drawings and descriptive matter in which there are illustrated and described preferred embodiments of the invention. It is to be understood, however, that the drawings are designed solely for purposes of illustration and not as a definition of the limits of the invention, for which reference should be made to the appended claims. It should be further understood that the drawings are merely intended to conceptually illustrate the structures and procedures described herein.

### BRIEF DESCRIPTION OF THE DRAWINGS

FIG. 1 is a screen capture of a prior art agent interface showing dialogue between a user and an automated information agent.
FIG. 2 is a screen capture of a main interface window which, when displayed on a mobile device, enables access to one or more agents according to a preferred embodiment of the present invention.
FIG. 3 is a screen capture of an agent selection screen accessible from the main interface window of FIG. 2.
FIG. 4 is a screen capture of a shortcuts menu accessible from the main interface window of FIG. 2.
FIG. 5 is a screen capture of an agent interaction screen accessible from the main interface window of FIG. 2.
FIG. 6 is a screen capture of a search results window generated in response to a command entered into the text input area of FIG. 5.
FIG. 7 is a hardware block diagram setting forth a system for communicating with one or more agents using a mobile device.
FIGs. 8A-8D together comprise an operational sequence for implementing communications between one or more agents and a mobile device, using the system of FIG. 7.
FIGs. 9A-9C together comprise a Java class diagram illustrating relationships among exemplary object classes used to implement the agent interface program of FIGs. 8A-8D.
FIG. 10 is a class diagram setting forth illustrative relationships among exemplary object classes which may be utilized to implement the Agent Service Client shown in FIG. 9B.
FIG. 11 is an information flow diagram setting forth an exemplary flow of location information between a user and an agent.
FIG. 12 is a table setting forth a plurality of classes for the class diagram shown in FIGs. 9A-9C.
FIG. 13 is a table setting forth a plurality of classes for the class diagram shown in FIG. 10.
FIG. 14 is a flowchart setting forth an operational sequence by which one or more of the agents of FIG. 7 are rendered capable of participating in a group chat.
FIGs. 15A-15C together comprise a flowchart setting forth an operational sequence by which human operator intervention is summoned to assist in responding to a query.

### DETAILED DESCRIPTION OF THE DRAWINGS

The ergonomic inefficiencies arising when an automated information agent is accessed from a mobile device with a text-based interface were discussed above, using the illustrative example of a mobile device interacting with the AOL Yellow Pages agent. In order to reduce or eliminate these ergonomic inefficiencies, the agent of the present invention uses a conversational interpretation mechanism that responds to a received query, and can do so based upon the location of the device. The received query may take the form of textual input, voice data, menu choices, a template completed by a user, or any combination thereof. If a query is presented as if the user were engaged in a plain-language interchange or Instant Messaging session with another person, such a query is said to be conversational. Conversational queries are converted to agent-readable queries by the conversational interpretation mechanism, as will be described in greater detail hereinafter. The device converts all non-textual received queries into textual form. A response to the textual query can be formulated in accordance with the location of the device. More specifically, the agent can automatically receive information about the location of the device from an external database server, and uses this information to perform a location-based search.

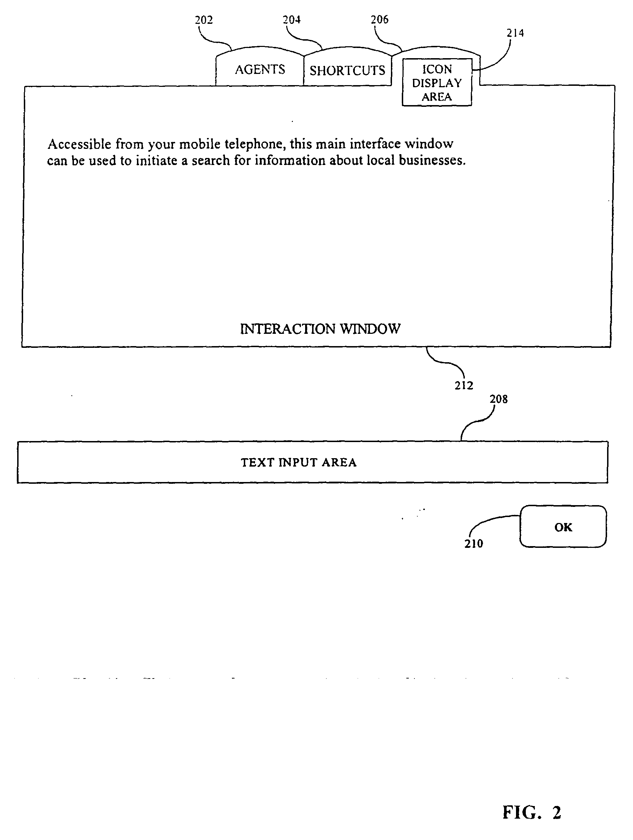

A graphical user interface for receiving and responding to queries is shown in FIG. 2, wherein it is assumed that the device having a text-based interface is implemented using a mobile device. However, it is to be understood that FIG. 2 is also applicable to virtually any device that provides a text-based graphical user interface. More specifically, FIG. 2 sets forth a screen capture of a main interface window which, when displayed on a mobile device, enables access to one or more agents according to a preferred embodiment of the present invention.

The main interface window includes an interaction window 212, a text input area 208, and an OK button 210. A plurality of command tabs are accessible from interaction window 212, including an Agents tab 202 and a Shortcuts tab 204. An agent cycling tab 206 includes an icon display area 214 for displaying any of a plurality of graphical objects one at a time, wherein each graphical object corresponds to one or more agents. Selection of Agents tab 202 initiates display of an agent selection screen on interaction window 212. Selection of Shortcuts tab 204 leads to a list of frequently-asked questions that may be posed to one or more automated information agents. Agent cycling tab 206 is used to sequentially select each of a plurality of graphical objects for display in icon display area 214, wherein each graphical object corresponds to at least one agent. When a graphical object displayed in icon display area 214 is selected, this initiates an automatic selection of one or more agents associated with the graphical object. Any interaction with the selected agent is displayed in interaction window 212. If agent cycling tab 206 selects a first agent, icon display area 214 displays a graphical object corresponding to the first agent. Next, if agent cycling tab 206 selects a second agent, icon display area 214 displays a graphical object corresponding to the second agent.

Text input area 208 accepts user-entered input representing at least one of a query for an agent or a screen display command for controlling interaction window 212. Queries for agents are sent across a communications network to a remote server, but screen display commands are handled locally on the mobile device. A finite set of screen display commands are stored on the mobile device. The user enters an input into text area 208 and presses OK button 210. If the input entered into text input area 208 is a screen display command included in the finite set of stored screen display commands, then the entered input is matched to one of the stored screen display commands and the command is executed by the mobile device. Otherwise, the input entered into text area 208 is considered to be a query. In the case of a query, the query is transmitted from the mobile device to the agent selected by agent cycling tab 206 and identified by a corresponding graphical object in icon display area 214. If the agent responds to the query, the response is received by the mobile device and displayed in interaction window 212.

A query for an agent may be formulated as an Instant Message including one or more keyword commands, an Instant Message including one or more plain language words or phrases, or an Instant Message including a combination of keyword commands and plain language words or phrases. Optionally, a query for an agent may be formulated using any of a variety of wireless communication protocols, such as short messaging service (SMS), text messaging, and others. Illustrative examples of queries are "Where is the nearest grocery store?", "Give me a list of Mexican restaurants", and "gl" (get location). The "gl" command instructs the agent to ascertain the location of the mobile device using, for example, caller identification (Call-ID) information, cell identification (Cell ID), or global positioning system (GPS) information received from the mobile device.

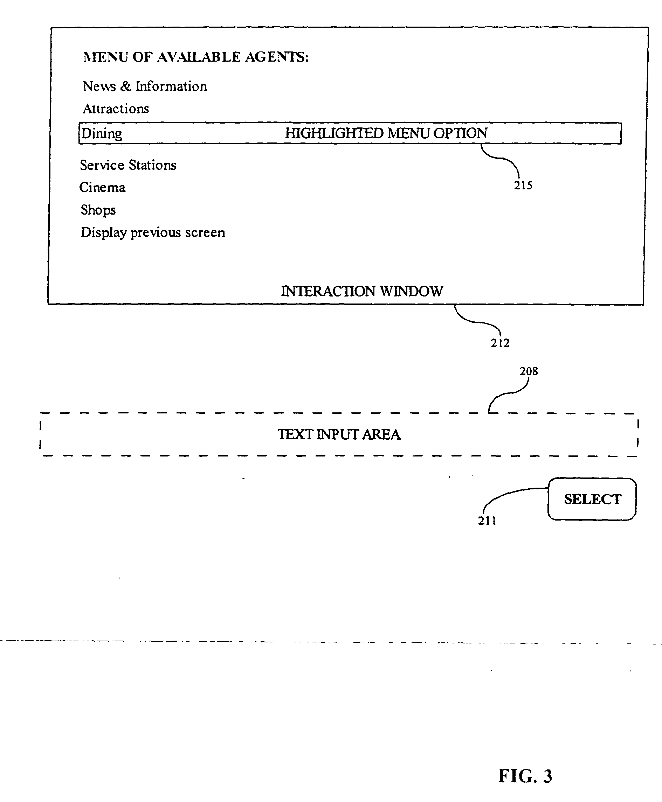

In the case of a screen display command, the user enters a display command phrase into text input area 208, and activates OK button 210. Upon activation, OK button 210 initiates transmission of the entered display command phrase to a graphical processing mechanism for interaction window 212. The graphical processing mechanism is programmed to execute the display command phrase entered by the user, thereby causing information to be displayed on interaction window 212 in accordance with the display command phrase. For example, if the user enters a display command phrase "what agents are active" into text input area 208 and presses OK button 210, the graphical processing mechanism causes interaction window 212 to display an agent selection screen, described in greater detail with reference to FIG. 3.

FIG. 3 shows an illustrative agent selection screen. The agent selection screen is accessible from Agents tab 202 of the main interface window displayed in interaction window 212 of FIG. 2, and is also accessible using the "what agents are active" command described above. Interaction window 212 is either blank (as shown), or contains a descriptive user prompt, such as "Welcome to the restaurant assistant. How may we help you?" When the user clicks on Agents tab 202 or enters the "what agents are active" command, available agents are listed on interaction window 212. Illustratively, an agent is selected from interaction window 212 using a cursor or pointing device to highlight and click on the desired agent. Optionally, the available agents may be arranged hierarchically according to topical categories. Topical categories refer to the category or categories of subject matter for which the agent is capable of formulating an answer in response to a query. A given agent may be listed in one or more than one topical category. In interaction window 212 of FIG. 3, several topical categories are shown: News & Information, Attractions, Dining, Service Stations, Cinema, Shops, and Display Previous Screen. The topical category "Dining" has been highlighted in a highlighted menu option 215 field. Once a topical category is selected by pressing a select button 211 to select the highlighted menu option in highlighted menu option 215 field, interaction window 212 displays a menu of topical subcategories for the highlighted menu option if such subcategories exist. Note that select button 211 (as well as OK button 210, FIG. 2) are implemented using soft (software-defined) keys, although it is also possible to implement select button 211 (FIG. 3) and/or OK button 210 (FIG. 2) using dedicated keys or buttons. If subcategories do not exist, an agent screen of an agent capable of responding to a query related to the topical category of the highlighted menu option is displayed on interaction window 212.

In addition to accessing an agent using hierarchical menus, agents may be accessed by entering a keyword into text input area 208, whereupon a keyword search is performed to locate a topical category related to the entered keyword. Topical categories and subcategories may be preprogrammed into the mobile device. Additionally or alternatively, a topical category or a topical subcategory may be provided by a human operator logging on to an instant messaging network and identifying a topical category or subcategory which, upon selection by a mobile device, will initiate a communications link between the mobile device and the agent or between the mobile device and the human operator.

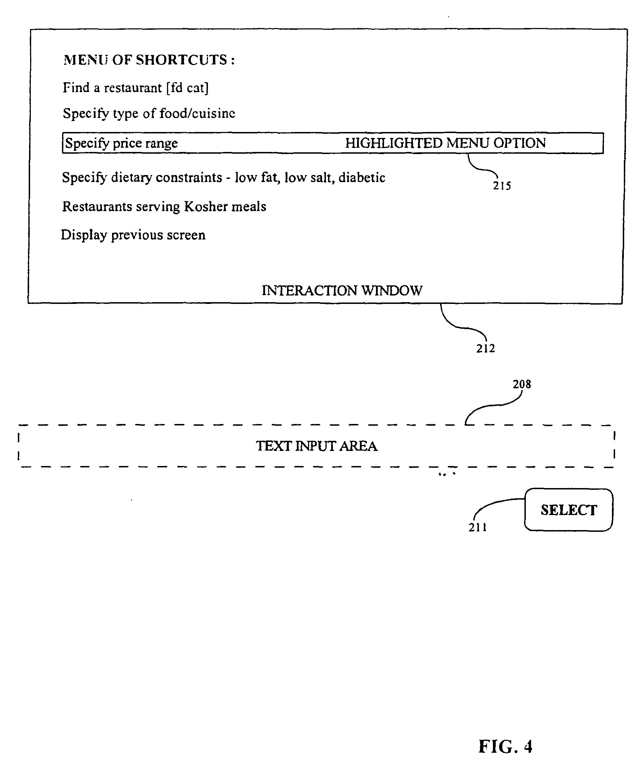

FIG. 4 is a screen capture of a shortcuts menu accessible from the main interface window of FIG. 2 by clicking on Shortcuts tab 204. Users interacting with an agent for the first time must learn about the functionality which the agent provides. In AOL Yellow Pages, for example, an ongoing dialogue provides the user with suggestions, and also provides help accessible through a "help" command. Since AOL Yellow Pages is typically utilized in operational environments where a user is not simultaneously accessing other agents, a "help" command may suffice. Yet, in operational environments where access to a multiplicity of agents is provided, the user may be confused if each agent has a unique interface for accepting queries formulated in an agent-specific manner. Accordingly, the shortcuts menu of FIG. 4 provides a user interface that is consistent from agent to agent.

The shortcuts menu of FIG. 4 provides a mechanism for conveniently and efficiently issuing a query to an agent by selecting a preformulated query from a displayed query menu. The query menu, displayed in interaction window 212, includes preformulated queries that are related to the selected agent. For example, the query menu of FIG. 4 shows a menu of shortcuts pertaining to the Dining agent highlighted and selected in FIG. 3. These shortcuts initiate queries such as "Find a restaurant", "Specify type of food or cuisine", Specify price range", "Specify dietary constraints", "Restaurants serving Kosher meals", and "Display previous screen".

A shortcut is selected by positioning highlighted menu option 215 field to overlay the desired shortcut and activating select button 211. Upon selection, some shortcuts will elicit an agent response without the necessity of the user entering further information into text input area 208. For example, upon selection of "Restaurants serving Kosher meals", the agent will respond with a list of such restaurants. Other shortcuts require the user to enter information into text input area 208 relating to the selected shortcut, and these shortcuts will elicit a request for further information if the required information is not entered into text input area 208. For instance, "Specify type of food or cuisine" will elicit an agent response "Enter type of food or cuisine desired" if the user does not enter this information into text input area 208 prior to activating select button 211.

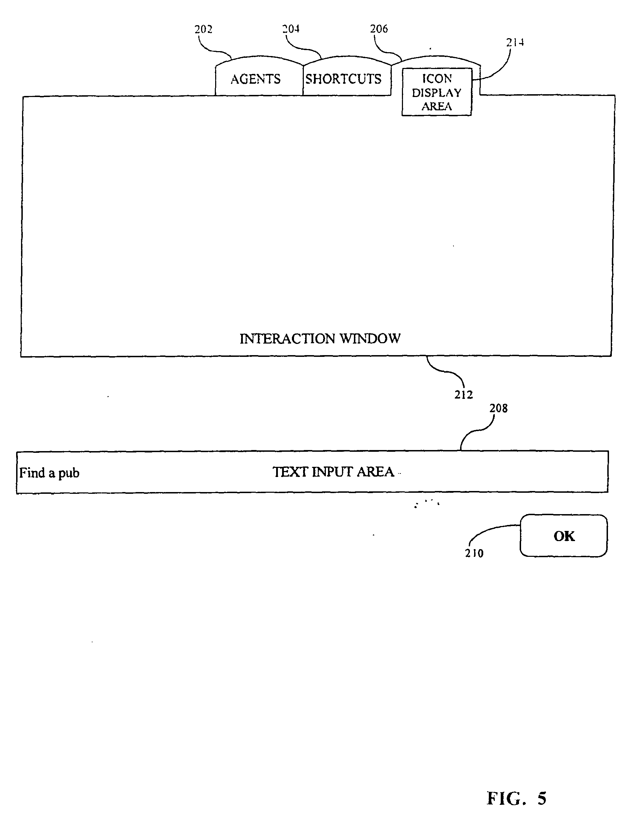

FIG. 5 shows an agent interaction screen accessible from interaction window 212 of FIG. 3. Prior art agents, including AOL Yellow Pages, use short keyword commands to direct interaction, such as "cl" for "change location". Short keyword commands are suited for certain applications, but are disadvantageous in that they are difficult for many users to remember. Moreover, different agent designers are free to choose the same short keyword command (i.e., "cl") to implement totally different functions (i.e., "change location" as contrasted with "change library").

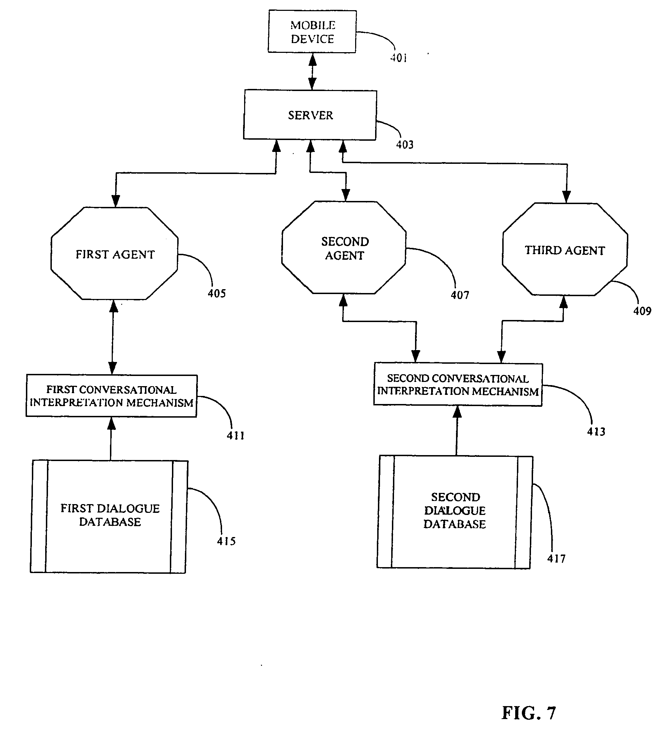

After entering a query into text input area 208, the user activates OK button 210, thereby initiating transmission of the entered query to the agent identified in icon display area 214. The agent of the present invention recognizes "plain language" typed queries such as "Find a pub" entered into text input area 208. The agent recognizes plain language queries through the use of a conversational interpretation mechanism (FIG. 7, first conversational interpretation mechanism 411 or second conversational interpretation mechanism 413) based upon AIML (Agent Interaction Markup Language). AIML includes a database that incorporates a plurality of plain language queries, and this database can be shared by a plurality of agents. Conversational queries are easier to remember than keyword commands, and are also advantageous because they can be used to provide a natural, intuitive, user-friendly interface across a plurality of agents.

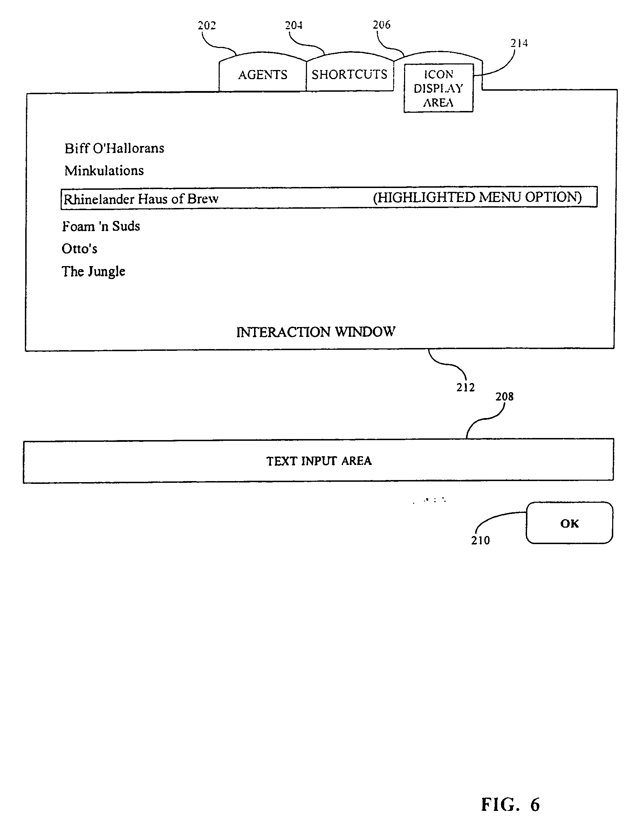

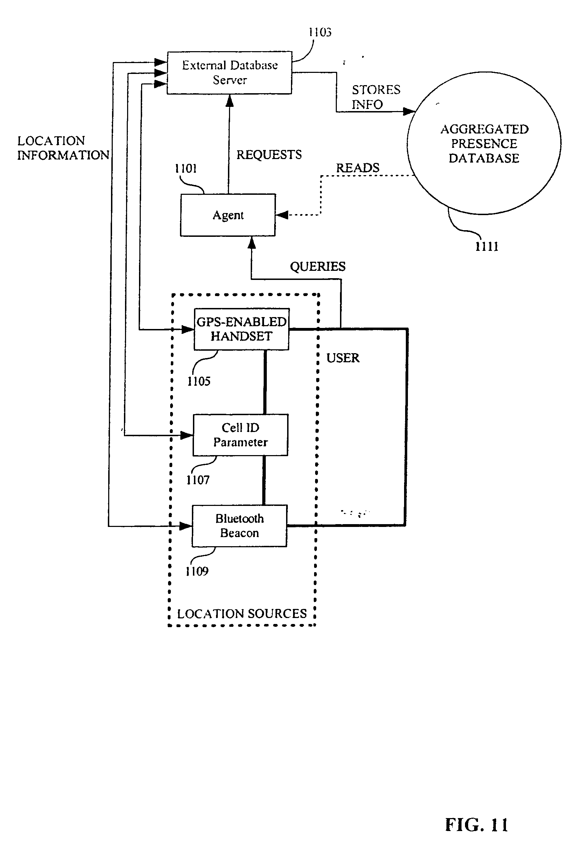

FIG. 6 is a screen capture of a search results window generated in response to the query "Find a pub" being entered into text input area 208 of FIG. 5. In response to this query, the list of pubs shown in interaction window 212 of FIG. 6 is displayed. The pubs are all within the user's current geographic area of interest. The list is generated by the agent, which is equipped to automatically ascertain the geographic location of the user. An external database server 1103 (described hereinafter with reference to FIG. 11) collects available information regarding a user's location - from GPS-enabled handset 1105, Cell Identity (Cell-ID) parameter 1107, or Bluetooth beacon 1109 where the location of the beacon is known, and sends latitude and longitude coordinates corresponding to the current location of mobile device 401 (FIG. 7, to be described hereinafter) to the agent. The agent then performs a location-based search based upon the location of mobile device 401 in response to user-entered queries.

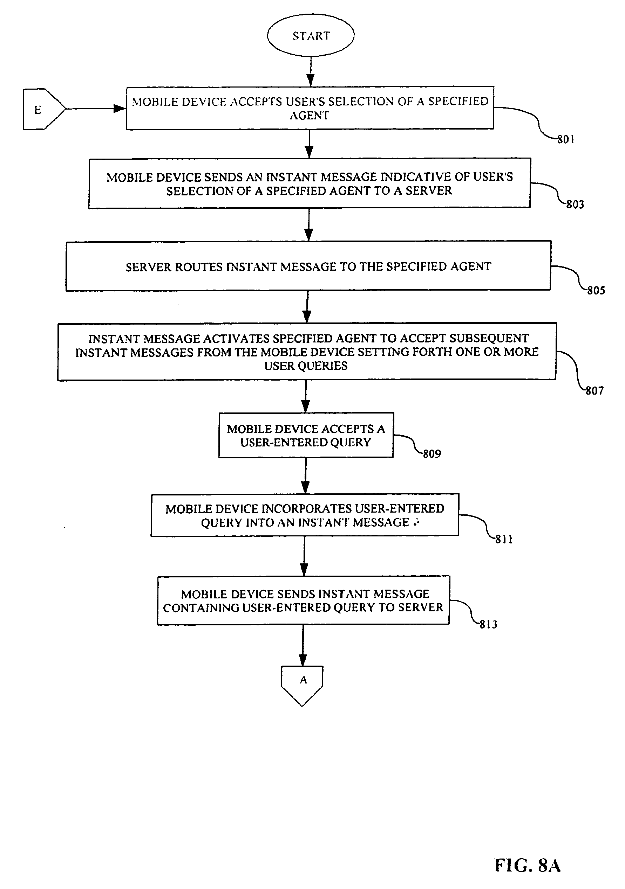

FIG. 7 is a hardware block diagram setting forth a system for communicating with one or more agents using a mobile device 401. Mobile device 401 may be implemented using a mobile telephonic device, a laptop computer, or any microprocessor-based portable device equipped to accept and display text-based information. Mobile device 401 is equipped with a local data cache for receiving and storing data in connection with an agent interface program described hereinafter with reference to FIGs. 8A-8D. During execution of the agent interface program, data such as location information related to the current location of mobile device 401 are stored in the local data cache, since location information is often re-used across a plurality of agent queries. Apart from location information, agent-specific information including menu hierarchies and frequently asked questions may also be stored locally.

Mobile device 401 is equipped to communicate with a server 403 capable of routing text-based messages from mobile device 401 to any of a plurality of agents, such as a first agent 405, a second agent 407, and a third agent 409. Server 403 is also capable of routing text-based messages from any of the first, second and third agents 405, 407, 409, respectively, to mobile device 401. In practice, server 403 may be implemented using a wireless server or a wireless telecommunications network coupled to a server.

First agent 405 is equipped to generate responses to conversational text-based queries by forwarding such queries to a first conversational interpretation mechanism 411. First conversational interpretation mechanism 411 uses a first dialogue database 415 to transform these conversational text-based queries into computer-readable queries. The computer-readable queries are sent to first agent 405 which prepares a response to the query. The response is received by server 403 which then forwards the response to mobile device 401.

Second and third agents 407, 409 are equipped to generate responses to conversational text-based queries by forwarding such queries to a second conversational interpretation mechanism 413. Second conversational interpretation mechanism 413 uses a second dialogue database 417 to transform these conversational text-based queries into computer-readable queries. The computer-readable queries are sent to second agent 407 or third agent 409 which prepares a response to the query. The response is received by server 403 which then forwards the response to mobile device 401. In this manner, second agent 407 and third agent 409 share a single conversational interpretation mechanism (second conversational interpretation mechanism 413) and a single dialogue database (second dialogue database 417). Such sharing advantageously avoids the additional expense and effort that would be involved in creating and maintaining two separate dialogue databases and two separate conversational interpretation mechanisms.

Illustratively, first and second conversational interpretation mechanisms 411, 413 are each implemented using an Agent Interaction Markup Language (AIML) dialog interpreter. The AIML dialog interpreter employs AIML for establishing a plain language dialogue with the user, and for interpreting one or more user queries. If the agent requires further information in order to formulate a response to a user query, or if the agent is not able to interpret a user query, the AIML dialog interpreter provides plain language prompts asking the user to supply further information about their query. AIML stores dialog in one or more XML files. A set of dialog rules, stored in AIML format and activated by the AIML dialog interpreter, are used to implement an interactive dialog with the user, further details of which are described in FIGs. 8A-8D.

FIGs. 8A-8D together comprise an operational sequence for implementing communications between one or more agents and a mobile device, using the system of FIG. 7. The program commences at block 801 (FIG. 8A) where a mobile device accepts a user's selection of a specified agent, such as first agent 405, second agent 407, or third agent 409 (FIG. 7). At block 803 (FIG. 8A), the mobile device sends an Instant Message indicative of the user's selection of a specified agent to server 403 (FIG. 7), whereupon the Instant Message is then used to activate the selected agent as outlined below. By way of example, it will be assumed herein that the selected agent is first agent 405.

The program proceeds to block 805 (FIG. 8A) where server 403 (FIG. 7) routes the Instant Message sent at block 803 to the specified agent which, in the present example, is first agent 405. At block 807 (FIG. 8A), the Instant Message activates the specified agent (first agent 405) to accept subsequent Instant Messages from mobile device 401 (FIG. 7) setting forth one or more user queries. These one or more user queries may be conversational text-based queries, or these queries may include one or more keyword commands. At block 809 (FIG. 8A), mobile device 401 (FIG. 7) accepts a user-entered query. Mobile device 401 then incorporates the user-entered query into an Instant Message (FIG. 8A, block 811). The program proceeds to block 813 where mobile device 401 (FIG. 7) sends the Instant Message containing the user-entered query to server 403.

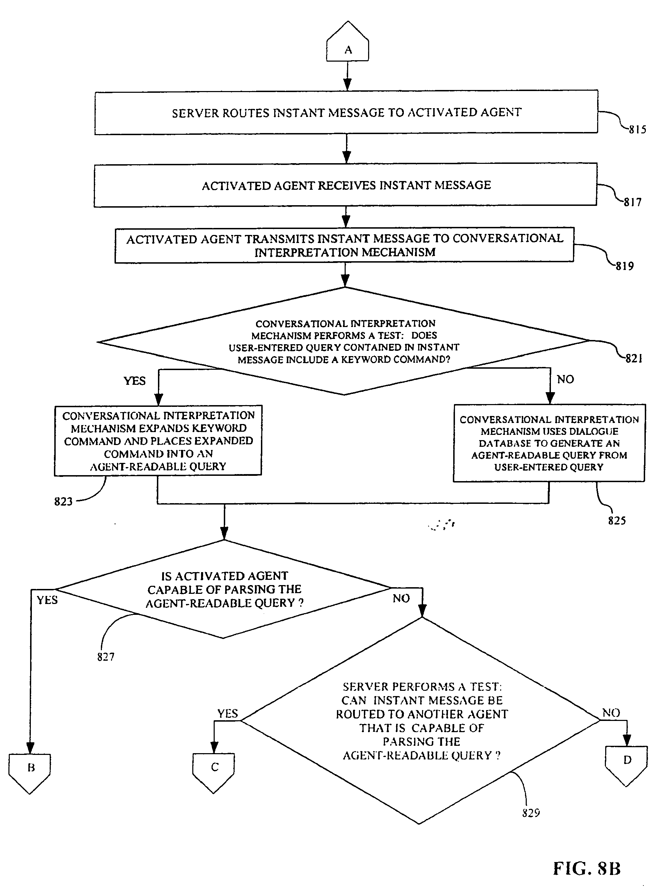

At block 815 (FIG. 8B), server 403 (FIG. 7) routes the Instant Message to the activated agent (first agent 405). The activated agent receives the Instant Message (FIG. 8B, block 817). Next, at block 819, the activated agent transmits the Instant Message to a conversational interpretation mechanism which, in the present example, is first conversational interpretation mechanism 411 (FIG. 7). The program proceeds to block 821 (FIG. 8B) where a test is performed to ascertain whether or not the user-entered query contained in the Instant Message includes a keyword command. If so, the step of block 823 is performed wherein the conversational interpretation mechanism (in this case, first conversational interpretation mechanism 411 of FIG. 7) expands the keyword command and places the expanded command into an agent-readable query. If the Instant Message does not include a keyword command as determined at block 821, the step of block 825 (FIG. 8B) is performed. At block 825, the conversational interpretation mechanism (first conversational interpretation mechanism 411 of FIG. 7) uses a dialogue database (in the present example, first dialogue database 415) to generate an agent-readable query from the user-entered query. Note that the contents of first dialogue database 415 (FIG. 7) may differ from that of second dialogue database 417 because each dialogue database may be customized to meet the intended application of each agent (such as first agent 405, second agent 407, or third agent 409) so that with use of, for example, the same conversational text for a query, the agent-readable query will be appropriate for the particular agent being used.

From either block 823 or block 825 (FIG. 8B), the program advances to block 827 where a decision is performed as to whether or not the activated agent (first agent 405, FIG. 7) is capable of parsing the agent-readable query. If so, the program advances to block 835. If the activated agent is not capable of parsing the agent-readable query, the program advances to block 829 (to be described in greater detail hereinafter).

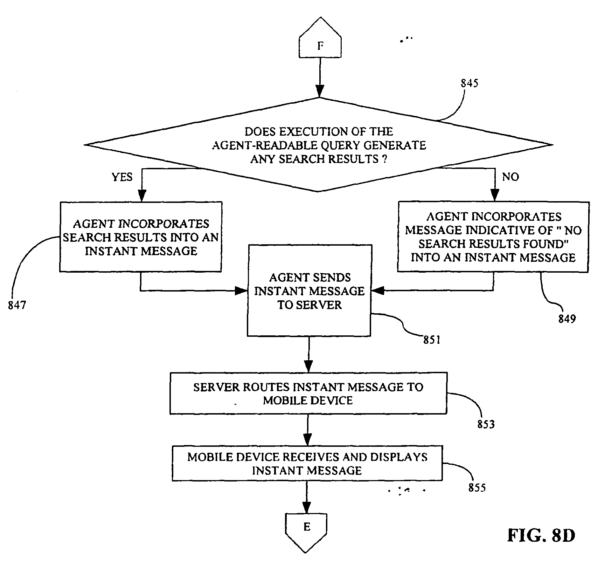

At block 835, the activated agent performs a test to ascertain whether or not the agent-readable query contains location information. If so, the program progresses to block 843. If the agent-readable query does not contain location information, the program progresses to block 837, to be described in greater detail hereinafter. At block 843, the agent executes the agent-readable query to perform a search using the location information contained within the query. The program continues to block 845 (FIG. 8D) where a test is performed to ascertain whether or not execution of the agent-readable query generates any search results. If so, the program advances to block 847 where the agent incorporates the search results into an Instant Message. If no search results are generated, the program advances to block 849 where the agent incorporates a message indicative of "no search results found" into an Instant Message.

From either block 847 or block 849 (FIG. 8D), the program advances to block 851 where the agent sends the Instant Message to server 403 (FIG. 7). At block 853 (FIG. 8D), server 403 (FIG. 7) routes the Instant Message to mobile device 401. Mobile device 401 receives and displays the Instant Message (FIG. 8D, block 855). The program then loops back to block 801 (FIG. 8A).

The negative branch from block 827 (FIG. 8B) leads to block 829 where server 403 (FIG. 7) performs a test to determine whether or not the Instant Message can be routed to another agent (such as second agent 407 or third agent 409) that is capable of parsing the agent-readable query. For a larger number of agents, the decision is made by programming server 403 to implement a meta-agent program, or by equipping server 403 to access an external meta-agent program. The meta-agent program is capable of matching the incoming Instant Message to an agent that is equipped to respond to the query. The meta-agent program is equipped with a conversational interpretation mechanism which may be substantially similar to first conversational interpretation mechanism 411 and/or second conversational interpretation mechanism 413 of FIG. 7. The conversational interpretation mechanism used by the meta-agent program includes functional AIML conversational grammar associated with one or more agents, such as first agent 405, second agent 407, and third agent 409. The meta-agent uses the AIML conversational grammar to extract one or more terms from the agent-readable query that are potentially indicative of the subject matter of the user-entered query. The extracted terms are used to index an agent database for retrieving the IM addresses of one or more agents suitable for responding to the agent-readable query. Although not explicitly shown in FIG. 8B, in cases where a meta-agent is employed, block 829 also includes the step of the meta-agent sending the retrieved IM addresses to mobile device 401 (FIG. 7), whereupon a user selects the IM address of a desired agent from among the retrieved IM addresses and sends a query directly to the selected agent.

Using a meta-agent reduces the number of wireless Instant Messages (i.e., calls) that mobile device 401 must send out in cases where a user does not know the identity of an agent suitable for responding to a given query. With a meta-agent, mobile device 401 need only select from among a plurality of n agents, requiring a total of two calls. On the other hand, if a meta-agent is not employed, an average of n/2 calls must be placed from mobile device 401. An average of n/2 calls are required because a query may be forwarded to an agent (i.e., first agent 405, FIG. 7) that is not capable of responding to a given query, whereupon the user will need to send the query to another agent. By way of an illustrative example, assume that a user has entered a query "find Chinese restaurant". The meta-agent is equipped to return the IM address(es) of one or more agent(s) that are appropriate for handling this type of query. In this case, the meta-agent matches the user-entered query to an agent identified by an IM address in the form of "Chinese-restaurant-finder".

In cases where a fewer number of agents are available, a meta-agent need not be employed, whereupon the decision of block 829 is performed by server 403 (FIG. 7) as before, only without the aid of a meta-agent program. In such cases, although not explicitly shown in FIG. 8B, block 829 also includes the steps of passing the user query in sequence directly from server 403 (FIG. 7) to each active agent in turn. The response received from each active agent indicates whether or not the query was parseable by that agent. This approach is most appropriate if there are only a small number of agents that will handle a query.

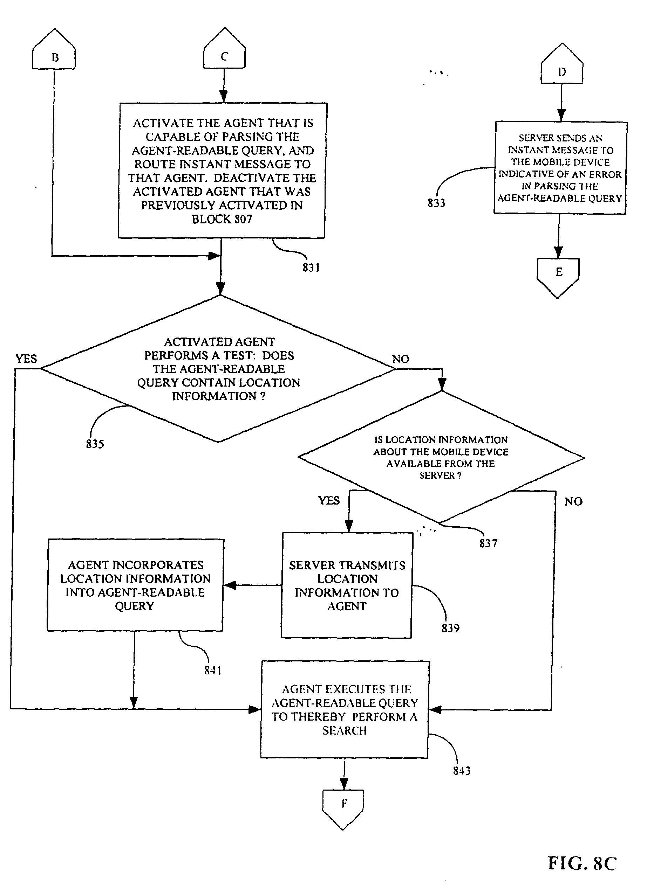

The affirmative branch from block 829 leads to block 831 (FIG. 8C) where the agent that is capable of parsing the agent-readable query is activated. Assume, for example, that second agent 407 is capable of parsing the agent-readable query. Accordingly, second agent 407 would be activated in block 831 (FIG. 8C). Also at block 831, the activated agent that was previously activated in FIG. 8A, block 807 (i.e., first agent 405, FIG. 7) is now deactivated. The program then advances to block 835 (FIG. 8C), described above. The negative branch from block 829 (FIG. 8B) leads to block 833 (FIG. 8C) where server 403 (FIG. 7) sends an Instant Message to mobile device 401 indicative of an error in parsing the agent-readable query. The program then loops back to block 801 (FIG. 8A).

The negative branch from block 835 (FIG. 8C) leads to block 837 where a test is performed to ascertain whether or not location information about mobile device 401 (FIG. 7) is available from server 403. If not, the program advances to block 843 (FIG. 8C), described above. The affirmative branch from block 837 leads to block 839 where the server transmits location information to the activated agent. The activated agent incorporates the location information into the agent-readable query (block 841), and the program advances to block 843 (described above).

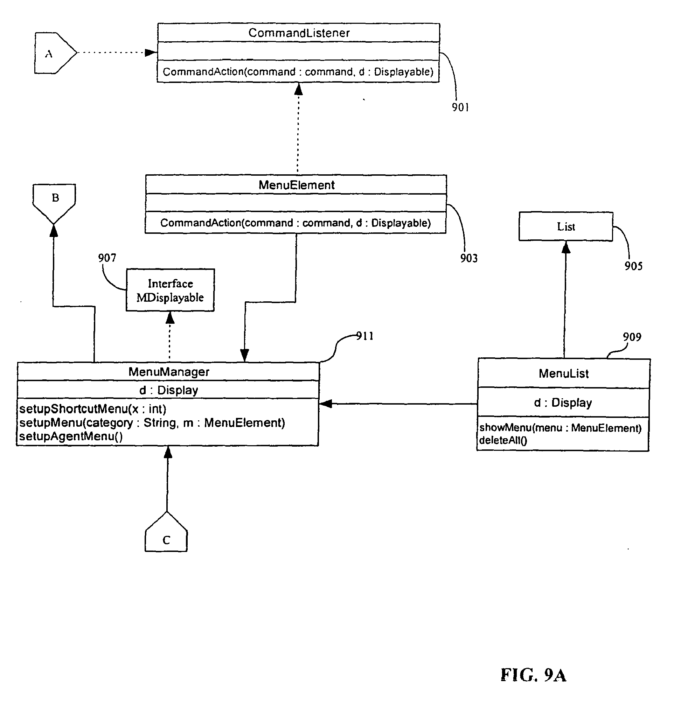

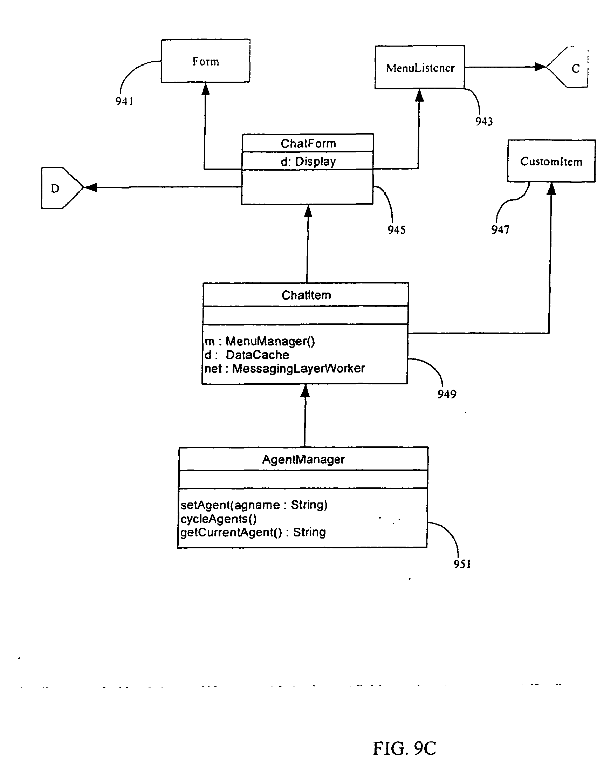

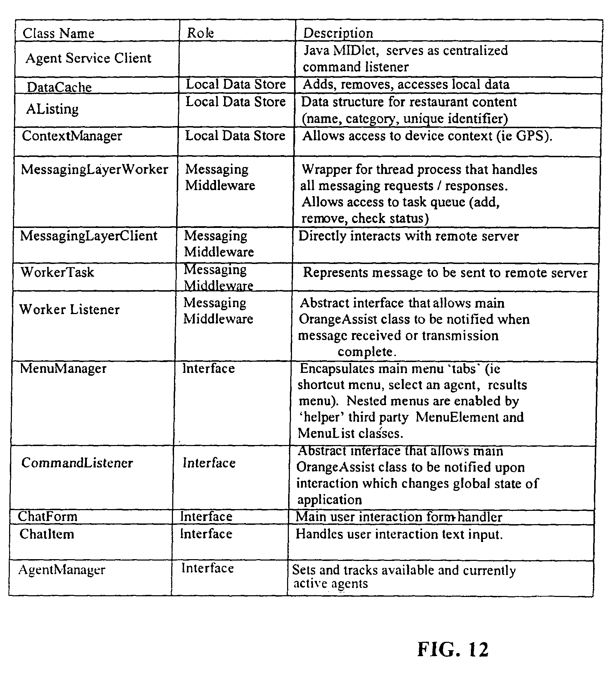

As shown in FIGs. 9A-9C and 12, an illustrative implementation of the agent interface program of FIGs. 8A-8D for programming mobile device 401 (FIG. 7) has been developed using Java. This interface program provides mobile device access to one or more agents over an instant messaging network. Java, presently one of the most popular object-oriented languages, is designed for use in distributed applications on corporate networks and the Internet. Some objectives of the Java implementation are to provide modularity among the various components of the program, as well as to provide for subsequent addition of features and changes in mobile device interfaces. Preferably, the program provides integration with various messaging protocols, such as Jabber, XMLRPC, and REST.

FIG. 12 describes a plurality of classes for an exemplary implementation of the agent interface program. In this example, the agent interface program is designed for interfacing with an agent capable of performing an automated search for restaurants. As adopted herein, the term "classes" refers to an object-oriented programming (OOP) language model organized on the basis of objects rather than actions, and data rather than logic. More specifically, object-oriented programming focuses upon one or more objects that are to be manipulated, and not upon the logic required to manipulate the objects. Illustrative examples of objects are names, addresses, and telephone numbers of individuals and businesses, names of buildings, floors within a specified building, buttons on a computer keyboard, and scroll bars displayed on a computer screen.

The initial procedure in developing software using an object-oriented programming approach is to identify all the objects that need to be manipulated, and to define how these objects relate to each other. This procedure is referred to as data modeling. Once an object has been identified, the object is generalized into a class of objects having one or more known characteristics. This generalization process may be conceptualized with reference to Plato's concept of the "ideal" chair that stands for all chairs in existence throughout the world. The class of objects is defined by defining the type of data that the class contains, as well as any logical sequences that are capable of manipulating the class.

Each distinct logic sequence capable of manipulating a given class is known as a method. This method is used to provide instructions to a processing mechanism, while the class characteristics are used to provide relevant data to the method. Users communicate with objects - and objects communicate with each other - using well-defined interfaces called messages.

FIGs. 9A-9C together comprise a class diagram illustrating relationships among exemplary object classes described in FIG. 12 and which may be utilized to implement the operational sequence of FIGs. 8A-8D. The class diagram, set forth in Unified Modeling Language (UML), depicts connections between classes, as well as class characteristics and methods. UML is a standard notation for the modeling of real-world objects as a first step in developing an object-oriented design methodology. UML is an accepted standard of the Object Management Group (OMG), and it has been endorsed by virtually all software development companies, including IBM and Microsoft.

The classes set forth in FIG. 12 and FIGs. 9A-9C are described as follows:
DataCache: DataCache 933 provides centralized access to application data stored locally on mobile device 401 (FIG. 7). More specifically, DataCache 933 provides access methods to information that interface and messaging middleware must share. Application-specific data, including query results, are stored and accessed through DataCache 933. DataCache 933 resides on mobile device 401 (FIG. 7), and is stored and accessed in block 855 (FIG. 8D). Local searches are conducted on mobile device 401 by looping through all cached data.

### Methods for DataCache:

(1) void addData (string, string, string). Parameters are the name of a restaurant (i.e., Wendy's), an application-wide unique identifier for the restaurant, and a category of restaurant (i.e., Italian). An AListing object (described hereinafter) is constructed with these parameters and added to an ordered vector of available Alistings.
(2) int getSize( ). Returns the number of cached Alistings.
(3) AListing getData(int). Parameter is the index number of the desired data item within cached AListings.

AListing: AListing 937 (Agent Listing) is a subclass used to encapsulate application-specific query results. This subclass includes restaurant listings used by a restaurant search application executed by an automated information agent. AListing 937 is local on the mobile device, and is used at block 855 (FIG. 8D). One implementation of AListing 937 is to subclass a query result superclass. The term "superclass" is best understood in the context of object-oriented languages. Pursuant to many object-oriented languages, a new object can be created from a preexisting object, such that the new object inherits one or more properties of the preexisting object. In this manner, preexisting code may be adapted for use in new operational settings with little or no modification required. New objects can be formed using pre-defined objects where new classes take over defined methods of the old objects. The term "superclass" refers to a parent class which defines methods that would be common to all query results. A subclass, such as AListing, is used to augment the general query result superclass with methods relevant to a particular agent listing domain.

### Methods for AListing:

(1) void addData (string, string, string). Parameters are the name of a restaurant (i.e., Wendy's), an application-wide unique id of the restaurant, and a category of restaurant (i.e., Fast Food). An AListing 937 object is constructed with these parameters and added to an ordered vector of available AListings.
(2) int getSize() - Returns the number of cached AListings.
(3) AListing getData(int)_ -- Parameter is the index number of the desired data item within cached AListings.

### ContextManager

*Purpose:* ContextManager 935 encapsulates access to device-resident geographic area of interest information. Context information is used in block 811 (FIG. 8A) to encapsulate context information for a user query.
*Description:* Provides access to GPS information, call history and logs, and a mobile device address book to the extent required by agents.

### Methods:

(1) GPSIoc getCurrentGPS( ) - returns data structure of current geographical location of mobile device 401 (FIG. 7).
(2) Boolean hascalled(string) - This parameter is a string that includes a telephone number. The parameter returns a value of "true" if the telephone number in the string has been called in the past. This parameter is useful in data filtering of query results.
(3) Boolean addAddress(string,Address) - This parameter is a string with a name and an Address object which represents a localized street address. The parameter returns a value of "true" if successful, "false" if there is an error.

### MessagingLayerWorker

*Purpose:* MessageLayerWorker 931 handles a messaging request using a separate thread. MessageLayerWorker 931 is a client class used in block 813 of Fig 8A to send instant messages to the server.
*Description:* Handles access to a task queue and notifies listeners when a task is completed.

### Methods:

(1) void setWorkerListener(WorkerListener) - This parameter implements a WorkerListener interface (described hereinafter). Messaging events are sent to WorkerListener 927.
(2) void addQueue( ) - This parameter sets forth a task object to add to a job queue.
(3) void run( ) - starts a messaging thread. The thread runs until it is terminated by another method or parameter. If idle (no job is being executed), a task is taken from the job queue and executed. WorkerListener 927 is notified when the job has finished.
(4) void cancelTask( ) - Parameter is a task object to cancel. This parameter stops job execution if the job is currently active, or removes the job from the queue if the job is not active.
MessagingLayerClient
*Purpose:* MessagingLayerClient 929 connects and communicates using a messaging infrastructure. Illustratively, MessagingLayerClient 929 is used to implement block 817 of FIG. 8B, and is also used in block 811 and 813 to send message to transport.
*Description:* Establishes connection to a Jabber (or other Instant Messaging) server, and is also used to send and receive low-level messages.

### Methods:

(1) void setUrl(String s) - Set server URL to which a connection is to be established.
(2) void getUrl(String s) - Get server URL of connection.
(3) void execute( ) - Sends message to server, blocks until a reply is received.

### WorkerTask

*Purpose:* WorkerTask encapsulates a messaging job. This corresponds to blocks 811 and 855 (FIGs. 8A and 8D) on the client (i.e., mobile device) side.
*Description:* An abstract interface used for notifying completion of WorkerTask.

### WorkerListener

*Purpose:* WorkerListener 927 notifies MessageLayerWorker 931 when messaging job has finished. WorkerListener 927 is used to implement block 855 of FIG. 8D.
*Description:* An abstract interface used for notifying completion of WorkerTask.
*Methods:* abstract WorkerTask finished( ) - returns WorkerTask object that has finished processing.

### MenuManager

*Purpose:* MenuManager 911 sets up user menus that are available in an application. Illustratively, MenuManager 911 is used to implement blocks 801 and 803 of FIG. 8A.
*Description:* Implements java Mdisplayable interface.

### Methods:

(1) void setupShortcutMenu() - Parameter is an integer ID identifying a given agent.
(2) void setupMenu( ) - Parameters are a string category for adding a listing of a menu element corresponding to a displayable menu choice.
(3) void setupAgentMenu() - Main function called when initialized.
(4) void onDisplay() - implements Mdisplayable method.

### CommandListener

*Purpose:* CommandListener 901 mediates between user interaction classes and main Java executables. CommandListener 901 is a helper class used by other classes pursuant to standard Java programming practices.
*Description:* An abstract interface.

### Methods:

(1) Abstract void commandAction()―Parameters are a command object and a displayable object

### ChatForm

*Purpose:* ChatForm 945 is the main object employed to implement user interaction. ChatForm 945 provides for the display of dialogue between a mobile device user and an agent on interaction window 212 of FIG. 2.

### Chatltem

*Purpose:* Chatltem 949 connects dialogue interaction with MenuManager 911, DataCache 933, and MessagingLayerClient 929. Chatltem provides for the display of entered dialogue on text input area 208 of FIG. 2.

### AgentManager

*Purpose:* AgentManager 951 handles selection of agents, as well as cycling of available agents. Illustratively, AgentManager 951 is used to implement block 801 of FIG. 8A.
*Description:* Provides access to Agents tab 202 (FIG. 2).

### Methods:

(1) Void setAgent( ) - Parameter is an agent name.
(2) Void cycleAgents( ) - Activates the next agent in a cyclical queue of active agents.
(3) String getCurrentAgent( ) - Get the name of the currently activated agent.

### Agent Service Client

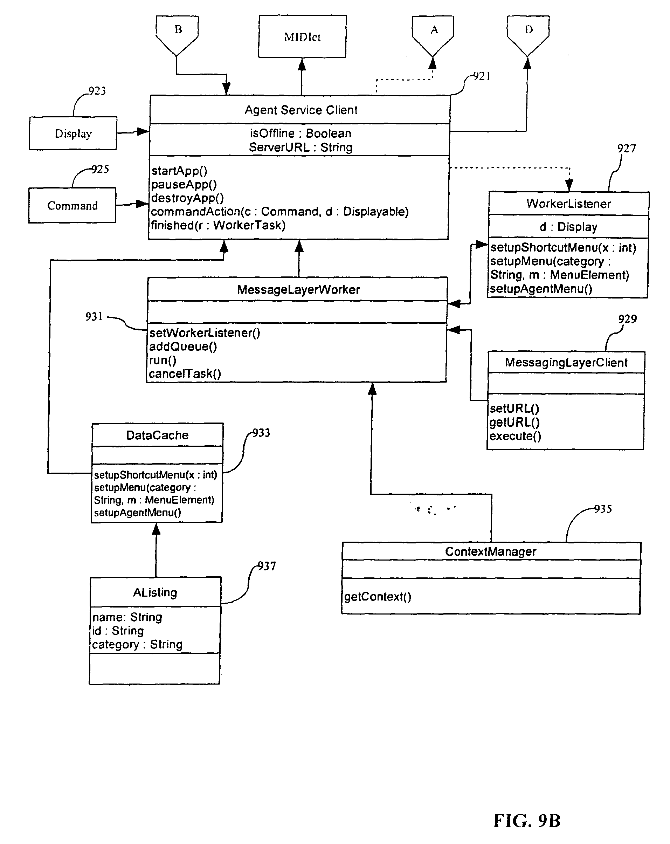

Agent Service Client 921 is used to create an automated Instant Messaging client, or "bot". As used herein, the term "client" refers to a requesting program or user in a client/server relationship. For example, the user of a Web browser issues client requests for pages from servers all over the Web. The browser itself is a client in its relationship with the computer that is obtaining and returning the requested HTML files. The computer handling the request and sending back the HTML file is a server. In the present context, the user of a mobile device (FIG. 7, 401) issues client requests for information to a server implemented by server 403. Server 403 then routes the client requests to Agent Service Client 921 (FIG. 9B).

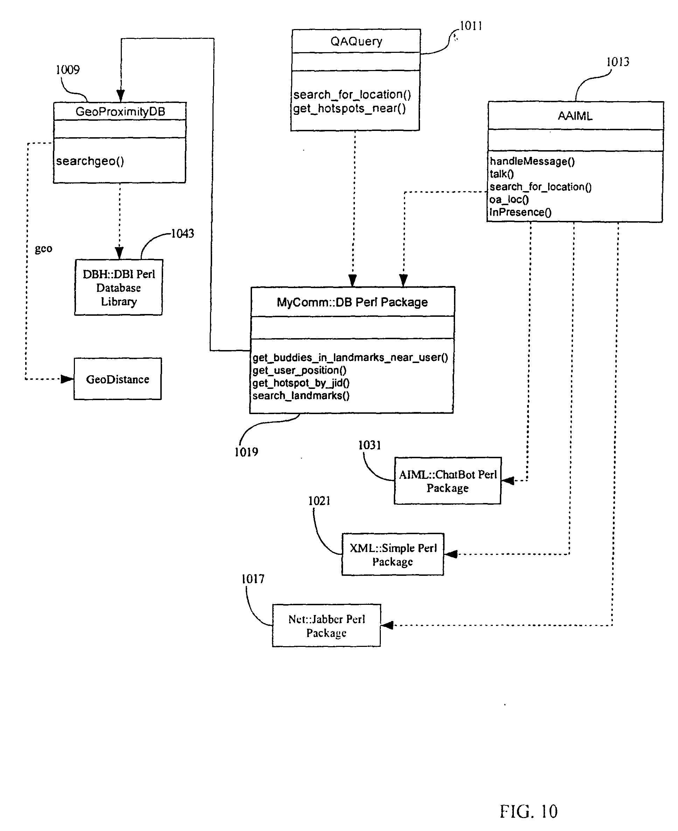

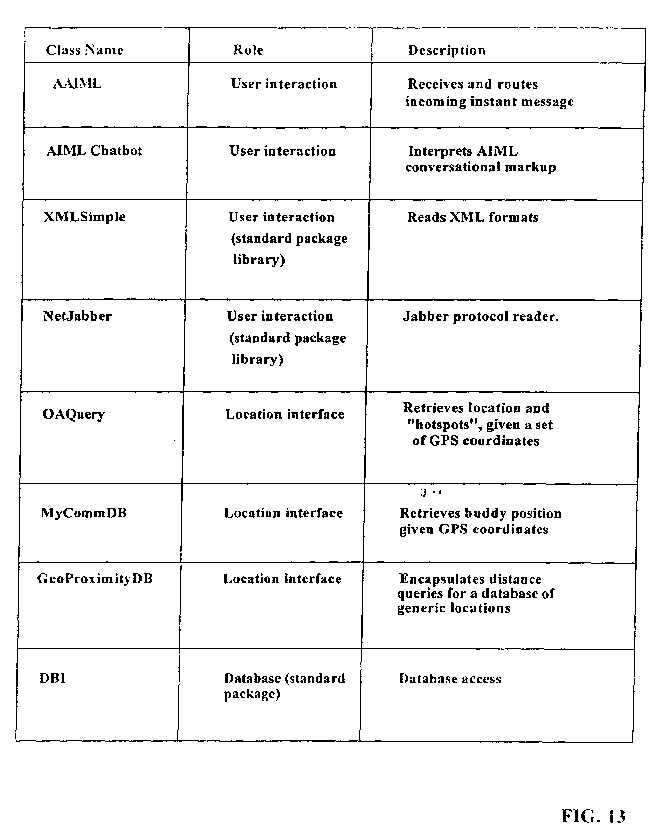

FIG. 10 is a UML class diagram setting forth illustrative relationships among exemplary object classes which may be utilized to implement the Agent Service Client 921 shown in FIG. 9B. These exemplary object classes are explained further in FIG. 13, which is a table setting forth a plurality of classes for the class diagram shown in FIG. 10. For purposes of illustration, Agent Service Client 921 will be described in the context of Jabber instant messaging, but it is to be clearly understood that Agent Service Client 921 may implement other types of instant messaging in lieu of, or in addition to, Jabber. In the context of Jabber, Agent Service Client 921 is equipped to utilize Extensible Messaging and Presence Protocol (XMPP). Based upon Extensible Markup Language (XML), XMPP is a protocol intended for instant messaging and online presence detection. XMPP functions between or among servers to facilitate near-real-time operation. The protocol may eventually allow Internet users to send instant messages to anyone else on the Internet, regardless of differences in operating systems and browsers. XMPP is sometimes called the Jabber protocol, but there are many applications besides Jabber that are supported by XMPP.
With reference to FIGs. 10 and 13, Agent Service Client 921 implements several operations using XMPP as follows. AAIML 1013 (FIG. 10) runs as a Perl script, managing user interaction, location lookup, and connection to external location databases. In the present illustrative implementation, the Perl script uses an open-source XML::Simple 1021 Perl Package and a Net::Jabber Perl Package 1017 to manage XMPP connections to a Jabber server. The script encapsulates an AIML::ChatBot Perl Package 1031 to interface with the AIML dialogue interpreter of first conversational interpretation mechanism 411 or second conversational interpretation mechanism 413 (FIG. 7).
Agent Service Client 921 (FIG. 9B) start-up actions:
Upon instantiation of AAIML 1013 (FIG. 10), the following actions are performed:
   Load configuration information from an XML file. At a minimum, this XML file will include the Internet address (URL) of the server with which communications are to be established, as well as a username and a password that the Jabber server requires for configuration.
   Register XMPP handler message callbacks to handle incoming messages. A "callback" is a code mapping that allows a loose coupling between a system event and the code which will process the event. Callbacks are used in Net::Jabber Perl Package 1017 to couple all Jabber events with a user-specified code. Incoming messages are intercepted by the XMPP handler, and routed to the message callback. In the present implementation, this callback is the procedure HandleMessage( ).
   Load restaurant and location database. The database is accessed by MyComm::DB Perl Package 1019, using DBH::DBI Perl database library 1043. An illustrative implementation of the restaurant and location database uses MySQL, but such databases can be implemented with any relational or XML-based interface.
   Establish a Jabber Instant Messaging stream using a Jabber server. If the stream is unable to connect, the server will produce an error message upon start-up.
   Login as user "agent". If an error message associated with an unregistered user is returned, register the user "agent". Proceed to the next step if the registration is successful, otherwise produce a server error upon start-up.
   Create internal AIML::ChatBot 1031 for use by message-handling callbacks. AIML::ChatBot 1031 loads the AIML grammar interpreter and the AIML grammars specified in the configuration XML file.
7. Execute incoming Jabber messages in a process loop. The AAIML script will process each incoming message with the handlemessage( ) procedure. This process is described in detail below:
a. Analyze message headers, pull out the sender's messaging address to pass to AIML::ChatBot 1031.
b. Check to see if message is a group chat invitation, specified in the XMPP protocol. If so, join group chat.
c. If in a group chat, ignore any messages that are not being directly addressed to the agent. Messages addressed to the agent are preceded by an "abbreviated agent" prefix such as "agt" to indicate that these messages are information queries for the agent. In a group chat, commands for the agent must be directly indicated as, for example, "agt find kosher restaurants". In a one-to-one chat with an agent, to contrast, the command could simply be "find kosher restaurants".
8. Pass message to the appropriate chatbot session. User commands are passed to AIML:: ChatBot 1031, which will return the appropriate response according to the rules specified in the AIML grammar.
Agent Interaction Markup Language (AIML) is employed to handle basic query input as the last step of message callback. More specifically, AIML is used to establish a dialogue with the user for the purpose of prompting the user for further information about their query. AIML requires dialog to be stored in an XML file. This XML file may, but need not, include scripting code callback for integration purposes. Dialog rules, stored in AIML format and activated by the AIML dialog interpreter of first conversational interpretation mechanism 411 or second conversational interpretation mechanism 413 (FIG. 7), are used to implement the following functional sequence for providing an interactive dialog with the user:
Greet the user. AIML::ChatBot 1031 receives a 'start dialog' signal upon initialization, and provides a greeting to the user such as "Hello! What are you looking for?"
If a search query is received from the user, conduct a search. The search query is passed by handleMessage( ) to AIML::ChatBot 1031. AIML::ChatBot 1031 uses the AIML conversational interpreter at first conversational interpretation mechanism 411 or second conversational interpretation mechanism 413 (FIG. 7) to extract search query parameters. AIML::ChatBot 1031 triggers a callback to the search_for_location method of AAIML, passing the search query parameters.
Provide an explanation of search query usage if an input other than a search query is received from a user. If no search query parameters were extracted from user-entered input, agent help information is retrieved for display.
Present results of search to the user. The AIML dialog files call functions that return appropriate responses to search queries. There are two forms of searches allowed by the agent: search by a named location, and search by geographical proximity. The results of these function calls are filtered through the AIML conversational interpreter at first conversational interpretation mechanism 411 or second conversational interpretation mechanism 413 (FIG. 7) using a results template specified by the AIML dialog files. The filtered search results are returned to the user.
FIG. 11 is an information flow diagram setting forth an exemplary flow of location information between a user of mobile device 401 (FIG. 7) and an agent 1101 (FIG. 11) when the operational sequence of blocks 835, 837, 839, 841 and 843 (FIG. 8C) is performed. Identifying a user's location provides a geographic area of interest for conducting information queries by agent 1101. Illustratively, agent 1101 does not collect user location information for itself, but relies on an external aggregated presence database 1111 provided by an external service. One example of a suitable aggregated presence database 1111 was developed by France Telecom, and is known as "OurCommunity" ™. An external database server 1103 collects available information regarding a user's location - from GPS-enabled handset 1105, Cell Identity (Cell-ID) parameter 1107, or Bluetooth beacon 1109 where the location of the beacon is known. Retrieval of a user's location information can be performed in any of two ways: requests sent directly to external database server 1103, or more generally via the Jabber XMPP protocol to the external database server 1103 which then mediates the request.
Location information for a user, once obtained, can be used in search functions available with agent 1101. Implementational details are provided below for several functions:
search_for_location in QAQuery 1011 (FIG. 10) (Search by location)
search_geo in GeoProximityDB 1009 (Geographic proximity searches)

### Search by location

The search handler function of agent 1101 (FIG. 11) is passed a location keyword (a unique substring of nearby locations) and a search domain keyword (restaurant categories in an illustrative implementation). The function searches aggregated presence database 1111 with those keywords and returns a list of matching results. For example, a location keyword of "galleria" would match "Galleria Mall". Domain keywords would include "chinese" or "thai" for a restaurant-finder application.
Searches are performed using the domain keyword within a subset of geographic locations. If the search locates a list of possible geographic location matches that are not unique, AIML dialogue is used to ask the user to be more specific. If the location is unique, the keyword is transformed into a unique location ("landmark") identifier. Searches are performed for the restaurant keyword to return all resulting "hotspots" within a fixed radius of the landmark. Results are listed in HTML with links to URIs that uniquely identify the given hotspot. The mobile device 401 (FIG. 7) user can click on a link to access hotspot details. URI, according to CIE RFC #1630, is a syntax used by the World-Wide Web initiative to universally encode addresses on the internet. URIs provide for the concept of a universal set of objects, of which the entities commonly known as Uniform Resource Locators (URL) are a subset. URLs differ from URIs in that URLs specify an access algorithm using network protocols. The URI scheme is utilized herein to identify landmarks and hotspots within the location database (aggregated presence database 1111 of FIG. 11).
The location-naming scheme utilized herein refers to a unique identifier for all landmarks and hotspots. All landmarks and hotspots in the system can be uniquely identified using URIs. The URI scheme is a hash of a location name and address. SHA1 is a secure hash algorithm specified in RFC 3174 and
Federal Information Processing Standard 180-1. The purpose of a hash algorithm is to compute a condensed representation, or digest, of a message or data file. When a message of any length less than 2 to the 64th power of bits is input, the SHA1 produces a 160-bit output called a message digest. This digest is used as a convenience to uniquely identify locations stored in the location database. While the hashing scheme used herein destroys some of SHA1's power by cropping its hash algorithm, the resultant data is unique enough to avoid collisions while still remaining visually identifiable.
In performing location searches, street address and zip codes are concatenated, removing any non-alphanumeric characters. The SHA1 of the resultant string is determined. Up to 7 characters of the location's 'city' are concatenated, and up to 7 characters of the 'state/locality' are concatenated, up to 12 characters of the location name and a hex encoding of the above SHA1. All characters that are not valid in the user name part of a URI are stripped (see RFC#1630, "URIs in WWW"). The string is cropped at 30 characters.

### Geographic proximity searches

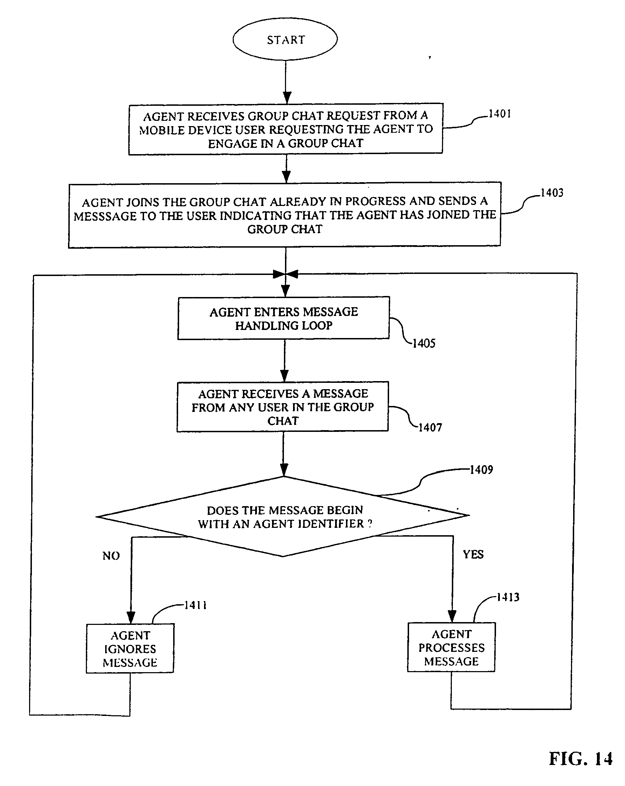

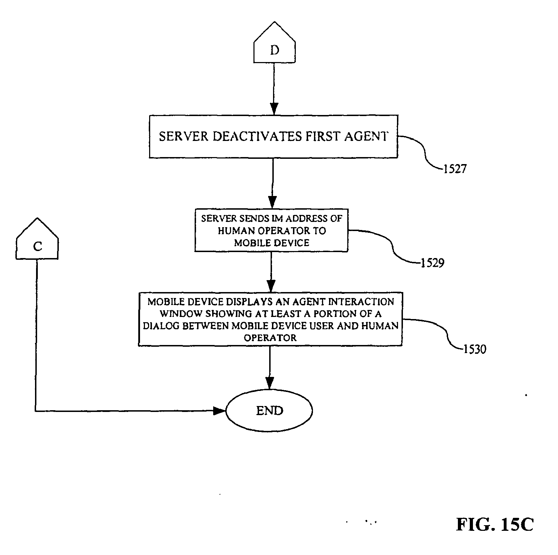

Agent 1101 allows users to search for all locations within a given geometric area about a geographically defined point. This geographically defined point constitutes a search reference point. The following algorithm may be employed:
Search for landmarks linearly within an area of two times a unit of measure in both the horizontal and vertical directions. This first step identifies landmarks that are located in a square of (length = two times the radius) that is centered on the search reference point.
For each landmark found in step one, calculate the distance from the landmark to the search reference point, making note of the URI and location for results within the given geometric area.
Optionally, sort results by distance from the search reference point, or crop the list of results to provide a list of a desired length.
Pursuant to a further embodiment of the invention, a conversational interpretation mechanism is provided which enables an agent to engage in a private Instant Message chat with a single user. Moreover, the conversational interpretation mechanism renders the agent capable of participating in a group chat where a plurality of users are contemporaneously engaged in an exchange of Instant Messages. The conversational interpretation mechanism participates in a group chat using any of the following two approaches. Pursuant to a first approach, the agent uses one-on-one Instant Messaging to participate in individual conversations with each of a plurality of users in the group. Pursuant to a second approach, the agent uses Instant Messaging to simultaneously communicate with a plurality of users. In the context of Jabber-based messaging architecture, the conversational interpretation mechanism is implemented by utilizing the Jabber group-chat facility, and by equipping the agent to automatically accept group chat requests. The aforementioned functionalities are depicted in the flowchart of FIG. 14.
FIG. 14 is a flowchart setting forth an operational sequence by which one or more conversational interpretation mechanisms (FIG. 7, 411, 413) are rendered capable of participating in a group chat. An agent receives a group chat request from a user of mobile device 401 (FIG. 7) requesting the agent to engage in a group chat (FIG. 14, block 1401). Block 1401 corresponds roughly to block 803 of FIG. 8A. The agent joins the group chat already in progress, and sends a message to the user indicating that the agent has joined the group chat (FIG. 14, block 1403). Any of a plurality of users may join the group chat at any time. At block 1405, the agent enters a message handling loop in "group chat mode" to accept user-entered queries sent, for example, pursuant to the operation of block 813 of FIG. 8A. In group chat mode, conditional evaluation of the agent-readable query is inserted after block 831 and before block 835 (FIG. 8C). From time to time, the agent may receive a message from a user in the chat group (FIG. 14, block 1407). Such messages are addressed to the agent using an agent identifier that is included in the message. At block 1409, a test is performed to ascertain whether or not the message received at block 1407 includes an agent identifier. An agent identifier may include a prespecified alphabetic or numeric or alphanumeric sequence in the user's message which serves to indicate that the message is intended for the agent and not for another user in the group chat. For example, an agent identifier may include the abbreviation "agnt" at the beginning of a user's message. If the message is "identified" by a keyword at the beginning of the message, (ie "agnt", "Assistant", etc.), the agent processes the message (FIG. 14, block 1413) to respond to the user's query, and the program loops back to block 1405. If the message does not include an agent identifier, the agent ignores the message, and no search is performed (block 1411) (this step corresponds to block 835 of FIG. 8C). The program loops back to block 1405.

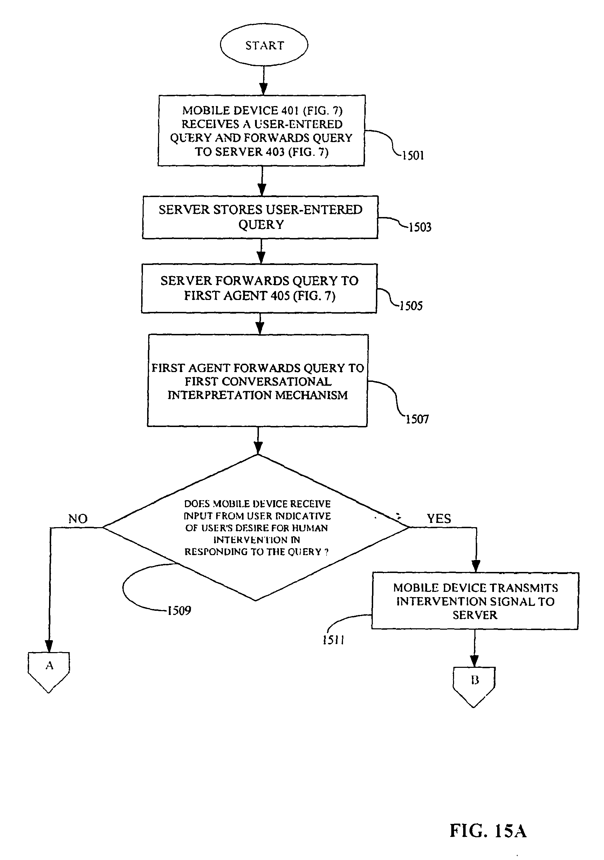

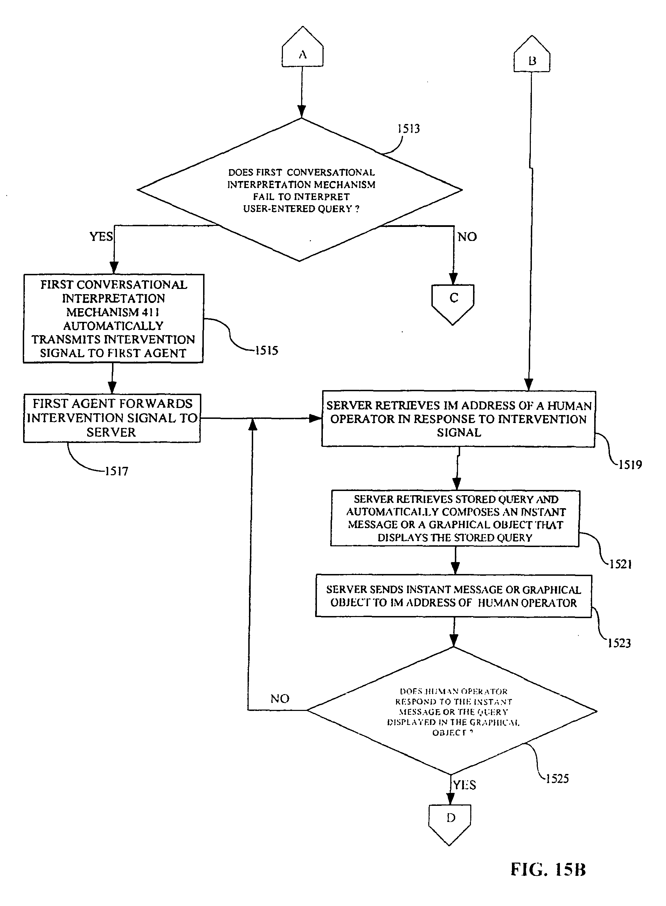

FIGs. 15A-15C together comprise a flowchart setting forth another embodiment of the invention involving an operational sequence by which human operator intervention is summoned to assist in responding to a query. Human operator intervention may be requested by a user, or may be automatically summoned if first or second conversational interpretation mechanisms (411 or 413, FIG. 7) cannot interpret a user's query. At block 1501 (FIG. 15A), mobile device 401 (FIG. 7) receives a user-entered query and forwards the query to server 403 (FIG. 7). The server stores the user-entered query (FIG. 15A, block 1503). To enable possible subsequent human intervention, server 403 logs the following information: (a) the name of a user; (b) the geographic location of the user's mobile device 401 (FIG. 7) at the time that the query was received; (c) the text of a user-entered query; and (d) any query results that are subsequently provided by an agent in response to the user-entered query. The logged information may be stored by server 403 (FIG. 7) as a flat-text, XML-based, or relational database. To conserve storage resources, server 403 (FIG. 7) may optionally store only the most recent query for each of one or more users. At block 1505 (FIG. 15A), the server forwards the query to an agent which may be, for example, first agent 405 (FIG. 7). The first agent forwards the query to first conversational interpretation mechanism 411 (FIG. 7) at block 1507 (FIG. 15A). At this time, the conversational interpretation mechanism generates an agent-readable query from the user-entered query (if this is possible based upon the nature of the user-entered query), whereupon the conversational interpretation mechanism sends the agent-readable query to the first agent. Using the agent-readable query, the first agent implement a search to generate search results. This corresponds roughly to block 845 of FIG. 8D.
At block 1509 (FIG. 15A), a test is performed to ascertain whether or not mobile device 401 (FIG. 7) receives input from a user indicative of the user's desire for human intervention in responding to the query. If so, the mobile device transmits an intervention signal to the server (FIG. 15A, block 1511), and the program jumps ahead to block 1519 (FIG. 15B, to be described hereinafter). The aforementioned input may be provided by the user selecting a tab or interface element shown in FIG. 2 that corresponds to a human agent, such as a predesignated agent accessed from Agents tab 202, Shortcuts tab 204, or icon display area 214 of FIG. 2. Alternatively, the aforementioned input may be provided in the form of a user-issued IM, or the input may be provided by means of a telephone call to a predesignated number.
The negative branch from block 1509 (FIG. 15A) leads to block 1513 (FIG. 15B) where a test is performed to ascertain whether or not the first conversational interpretation mechanism fails to interpret the user-entered query. If not, the program is exited. Otherwise, the program advances to block 1515 (FIG. 15B) where the first conversational interpretation mechanism automatically transmits an intervention signal to the first agent. The first agent forwards the intervention signal to the server at block 1517. Triggering of the intervention signal corresponds roughly to block 843 (FIG. 8C). The conversational interpretation mechanism or the first agent may be programmed to issue the intervention signal in response to the occurrence of certain conditions, such as cases in which no search results were retrieved, or cases in which the user-entered query was misspelled.
To handle user requests for human intervention, the server maintains a queue of available human operators. At block 1519 (FIG. 15B), the server retrieves the IM address of a human operator in response to the intervention signal. The server retrieves the stored information associated with the user query as described above, and delivers the information to the human operator in the form of an Instant Message or in the form of another application that enables the query to be displayed. Illustratively, the server retrieves the stored query and automatically composes an Instant Message or a graphical object that displays the stored query for the human operator (block 1521). The server sends the Instant Message or the graphical object to the IM address of the human operator (block 1523). At block 1525, a test is performed to ascertain whether or not the human operator responds to the Instant Message or to the query displayed in the graphical object. If not, the program loops back to block 1519 where the server retrieves the IM address of another human operator. Note that the human operator must 'accept' interaction with the user before the link is initiated. The query may be displayed before or after the human operator accepts interaction, though it is reasonable to assume that the human operator may want to ascertain the nature of the problem before accepting interaction.
The affirmative branch from block 1525 leads to block 1527 (FIG. 15C) where the server deactivates the first agent. The server sends the IM address of the human operator to the mobile device (block 1529), and the mobile device displays an agent interaction window showing at least a portion of the dialogue between the mobile device user and a human operator (block 1530). At block 1530, the server sets up a communication channel as requested by the mobile device. In cases where the mobile device requests an Instant Message response, when the operator accepts interaction (block 1525, FIG. 15B), the server deactivates the first agent and sends the human operator the IM address of the mobile device user. Optionally, any of the Agents tab 202, the Shortcuts tab 204, and the icon display area 214 (FIG. 2) may be graphically modified to indicate current interaction with a human operator. At block 1530 (FIG. 15C), one or more user messages sent by the mobile device are routed directly to the human operator with no intervention on the part of the first agent.
While there have been shown, described and pointed out fundamental novel features of the invention as applied to a preferred embodiment thereof, it will
be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A system for reducing or eliminating ergonomic inefficiencies arising when an automated information agent is accessed from a device having a text-based graphical user interface and an input mechanism, wherein the graphical user interface is capable of displaying at least textual information and the input mechanism is capable of accepting a user's selection of a specified agent from a menu of agents and a user-entered, text-based, plain language query, the system comprising:
a message server for receiving the plain language query from the device, and for routing the plain language query to the specified agent; and
a conversational interpretation mechanism, in communication with the specified agent, for formulating an agent-readable query from the plain language query to which the specified agent is capable of responding.

2. The system of claim 1, wherein the specified agent automatically receives location information about the location of the device from an external database server and responds to the plain language query in accordance with the location of the device.

3. A device for accessing any one from among a plurality of automated information agents, the device being usable with a system comprising: (i) a message server for receiving a text-based, plain language query from the device, and for routing the plain language query to a user-selected agent from among the plurality of agents; and (ii) a conversational interpretation mechanism, in communication with the user-selected agent, for formulating an agent-readable query from the plain language query to which the specified agent is capable of responding, the device comprising:
a communication mechanism for transmitting at least one of a user's selection of an agent or a text-based, plain language query to the message server;
a text-based graphical user interface capable of displaying textual information and a hierarchical menu of agents; and
an input mechanism, capable of accepting a user's selection of a specified agent from the hierarchical menu of agents, and capable of accepting a text-based, plain language query.

4. The device of claim 3, further including a location determining mechanism for determining the geographic location of the device and forwarding the determined geographic location to the communication mechanism, wherein the communication mechanism is equipped to transmit the determined geographic location to the specified agent, and wherein the specified agent responds to the agent-readable query in accordance with the transmitted location of the device.

5. The device of claim 3, wherein the communication mechanism is capable of receiving an electronic message from the message server identifying a plurality of agents that are accessible to the message server, the text-based graphical user interface displays a hierarchical menu of agents that includes the plurality of agents identified in the electronic message, and further comprising an agent selection subprogram, responsive to a first input entered into the input mechanism, to sequentially display identity information on the text-based graphical user interface for each of the plurality of agents identified in the electronic message.

6. The device of claim 5, wherein the agent selection subprogram responds to a second input entered into the input mechanism by selecting a first agent when identity information corresponding to the first agent is displayed on the text-based graphical user interface, and wherein the agent selection subprogram responds to a third input entered into the input mechanism by selecting a second agent when identity information corresponding to the second agent is displayed on the text-based graphical user interface, to thereby provide substantially simultaneous user access to the first and second agents.

7. The device of claim 6, wherein, for at least one of the first agent and the second agent, the text-based graphical user interface displays the most recent query accepted by the input mechanism, and does not display any queries entered prior to the most recent query.

8. A method for reducing or eliminating ergonomic inefficiencies arising when an automated information agent is accessed from a device having a text-based graphical user interface, the method comprising the steps of:
generating a list of agents that are accessible to the device;
transmitting the list of agents to the device;
receiving from the device a user's selection of an agent included in the list of agents;
receiving a plain language query from the device;
routing the plain language query to the user-selected agent;
the user-selected agent routing the plain language query to a conversational interpretation mechanism;
the conversational interpretation mechanism transforming the plain language query into an agent-readable query to which the user-selected agent is capable of responding, and routing the agent-readable query to the user-selected agent; and
the user-selected agent formulating a response to the agent-readable query.

9. The method of claim 8, further comprising the steps of:
the user-selected agent receiving from the device information about the geographic location of the device; and the user-selected agent formulating a response to the agent-readable query in accordance with the geographic location of the device.

10. The method of claim 8, further comprising the steps of:
the user-selected agent automatically receiving information about the geographic location of the device from an external database server; and
the user-selected agent formulating a response to the agent-readable query in accordance with the geographic location of the device.

11. A method for using a device to access any of a plurality of automated information agents, the method comprising the following steps performed by the device:
receiving a list of agents that are accessible to the device;
displaying the list of agents in the form of a hierarchical menu;
accepting a user's selection of an agent from the hierarchical menu;
accepting a plain language query entered by a user;
transmitting the plain language query to the agent selected from the hierarchical menu; and
receiving a response to the plain language query from the agent.

12. The method of claim 11, wherein the received response to the plain language query is formulated in accordance with where the device is located.

13. The method of claim 11, further comprising the steps of:
the device sequentially displaying identity information for each of the plurality of agents included in the received list of agents,
the device accepting a first input when identity information corresponding to a first agent is displayed on the device, thereby selecting a first agent, and
the device accepting a second input when identity information corresponding to a second agent is displayed on the device, thereby selecting a second agent and providing substantially simultaneous access to the first and second agents.

14. The method of claim 13, wherein, for at least one of the first agent and the second agent, the device displays the most recent query accepted by the device, and does not display any queries accepted prior to the most recent query.

15. A device for accessing any of a plurality of automated information agents, the device being usable with a system comprising a messaging transport mechanism for receiving a query from the device, and for routing the query to a user-selected agent from among the plurality of agents; the device comprising:
a communication mechanism for transmitting at least one of a user's selection of an agent or a query to the messaging transport mechanism;
a text-based graphical user interface capable of displaying a hierarchical menu of agents and a template for a user to complete;
an input mechanism, capable of accepting a user's selection of a specified agent from the hierarchical menu of agents, and capable of accepting user input for completing the template to thereby generate a user-completed template; and
a processing mechanism capable of transforming the user-completed template into a query.

16. A method for communicating with an automated information agent in the course of a group chat among a plurality of users over the Internet, wherein the agent is capable of responding to a query from any of the users to perform a search for information desired by the user, comprising:
joining a specified agent to the group chat in response to a message from any one of the users;
monitoring subsequent messages from the users during the group chat for any message that includes an agent identifier; and
if an agent identifier is detected which has been assigned to the specified agent, processing the message as a query to perform an information search responsive to said query.
